# EUROPEAN PATENT APPLICATION

(11) **EP 4 761 186 A1**
(43) Date of publication of application: **17.06.2026**
(21) Application number: 24858694.3
(22) Date of filing: 29.08.2024
(51) Int. Cl.: H04L 12/12

(54) **COMMUNICATION METHOD, COMMUNICATION DEVICE, CHIP, AND COMPUTER READABLE STORAGE MEDIUM**

(30) Priority: 31.08.2023 CN 202311128762
(71) Applicant: Yinwang Intelligent Technologies Co., Ltd., Shenzhen, Guangdong 518110 (CN)
(72) Inventor: ZHANG, Xingxin, Shenzhen, Guangdong 518129 (CN); WANG, Xuehuan, Shenzhen, Guangdong 518129 (CN)
(74) Representative: Maiwald GmbH
(86) International application number: PCT/CN2024/115636
(87) International publication number: WO 2025/045163

(57) **Abstract**

This application discloses a communication method, a communication apparatus, a chip, and a computer-readable storage medium. The method may be applied to a communication system including a primary node and a plurality of secondary nodes. The method includes: generating a first frame, where the first frame is at least used to determine a sleep start time of a second node; and sending the first frame. In embodiments of this application, the first frame is at least used to determine the sleep start time of the second node, so that the second node determines the sleep start time of the second node, and enters a sleep state upon arrival of the sleep start time, to reduce power consumption. Further, the first frame is specifically used to determine sleep start times of the second node and one or more downstream nodes of the second node, so that the second node and the one or more downstream nodes of the second node can determine a same sleep start time, to implement synchronous sleep.

## Description

This application claims priority to Chinese Patent Application No. 202311128762.5, filed with the China National Intellectual Property Administration on August 31, 2023, and entitled "COMMUNICATION METHOD, COMMUNICATION APPARATUS, CHIP, AND COMPUTER-READABLE STORAGE MEDIUM", which is incorporated herein by reference in its entirety.

### TECHNICAL FIELD

This application relates to the communication field, and in particular, to a communication method, a communication apparatus, a chip, and a computer-readable storage medium.

### BACKGROUND

In a vehicle-mounted multi-node wired audio transmission system, a daisy chain topology is typically used between a primary node and a plurality of secondary nodes. In the vehicle-mounted multi-node wired audio transmission system, a system on chip (system on chip, SoC) of a head unit serves as a host, and communicates, through the primary node, with peripherals connected to the secondary nodes. An example of the vehicle-mounted multi-node wired audio transmission system is as follows: The SoC of the head unit serving as the host is connected to the primary node, an audio codec (Code decode, Codec) is connected to a first secondary node (an audio coder is a peripheral connected to the first secondary node), a peripheral of a microphone (microphone, MIC) 1 is connected to a second secondary node, and a peripheral of a MIC 2 is connected to a third secondary node. In this example, to-be-played audio signals are sent by the host to the audio codec via the primary node and the first secondary node; audio signals collected by the MIC 1 are transferred to the host via the second secondary node, the first secondary node, and the primary node; and an audio signal collected by the MIC 2 is transferred to the host via the third secondary node, the second secondary node, the first secondary node, and the primary node. When there is no data service transmission in the vehicle-mounted multi-node wired audio transmission system, if nodes in the system enter a sleep state, power consumption of the system can be reduced. Therefore, there is a need to study a solution about how to control node sleep in the transmission system, to reduce power consumption.

### SUMMARY

Embodiments of this application disclose a communication method, a communication apparatus, a chip, and a computer-readable storage medium, to control a plurality of nodes in a transmission system to synchronously sleep, so as to reduce power consumption.

According to a first aspect, an embodiment of this application provides a communication method. The method is applied to a first node, and the method includes: generating a first frame, where the first frame is at least used to determine a sleep start time of a second node; and sending the first frame. That the first frame is at least used to determine the sleep start time of the second node may be replaced with the following: The first frame is at least used by the second node to determine the sleep start time. The first node and the second node are different.

In this embodiment of this application, the first frame is at least used to determine the sleep start time of the second node, so that the second node determines the sleep start time of the second node, and enters a sleep state upon arrival of the sleep start time, to reduce power consumption.

In a possible implementation, the first frame is specifically used by the second node and one or more downstream nodes of the second node to determine a sleep start time. For example, the first node is a primary node in a communication system, the second node is a secondary node in the communication system, and a time offset (offset) between sleep start times determined by any two of each downstream node of the second node and the second node is less than a sending periodicity of a communication frame in the communication system. For example, the sending periodicity is 20.83 µs, and the time offset between sleep start times determined by any two nodes does not exceed 2 µs. In this example, sleep start times determined by the second node and the one or more downstream nodes of the second node are substantially the same. In this way, the second node and the one or more downstream nodes of the second node enter the sleep state after the respectively-determined sleep start times, so that the second node and the one or more downstream nodes of the second node can synchronously sleep, that is, sleep at the same time, to reduce power consumption.

In this implementation, the first frame is specifically used by the second node and the one or more downstream nodes of the second node to determine a sleep start time, so that the second node and the one or more downstream nodes of the second node determine respective sleep start times, and enter the sleep state upon arrival of the sleep start times, to reduce power consumption.

In a possible implementation, a quantity of second nodes is k. In other words, the first frame is at least used to determine sleep start times of k second nodes, where k is an integer greater than 1. The k second nodes may determine respective sleep start times based on the first frame. For example, the first node is a primary node in a communication system, the k second nodes are k secondary nodes in the communication system, and a time offset (offset) between sleep start times determined by any two of the k second nodes is less than a sending periodicity of a communication frame (for example, a control frame below) in the communication system. For example, the sending periodicity is 20.83 µs, and the time offset between sleep start times determined by any two nodes does not exceed 2 µs. In this example, the first frame is at least used by the k second nodes to determine sleep start times, and the sleep start times determined by the k second nodes are substantially the same. In this way, the k second nodes enter the sleep state after the respectively-determined sleep start times, so that the k second nodes can synchronously sleep, to reduce power consumption.

In this implementation, the first frame is at least used by the k second nodes to determine sleep start times, so that the k second nodes determine respective sleep start times, and enter the sleep state upon arrival of the sleep start times, to reduce power consumption.

In a possible implementation, the first frame includes first indication information and second indication information, the first indication information at least indicates that the first frame is a control frame used to determine the sleep start time, and the second indication information is at least used to determine the sleep start time.

In this implementation, the first indication information at least indicates that the first frame is a control frame used to determine the sleep start time, so that the second node learns, based on the first indication information, that the first frame is a control frame used to determine the sleep start time. The second indication information is at least used to determine the sleep start time, so that the second node determines the sleep start time of the second node based on the second indication information.

In a possible implementation, the second indication information includes a backoff count value, the backoff count value is associated with a first time interval, and the first time interval is equal to a time interval between a moment at which the second node receives the first frame and the sleep start time of the second node. An example in which the backoff count value is associated with the first time interval is as follows: The backoff count value is positively correlated with the first time interval. In this application, a time interval may be replaced with a time offset or a time offset value. For example, the first time interval may be replaced with a first time offset or a first time offset value.

In this implementation, the backoff count value is associated with the first time interval, so that the second node obtains the first time interval based on the backoff count value, and then determines the sleep start time of the second node.

In a possible implementation, a product of the backoff count value and a first periodicity is equal to the first time interval, and the first periodicity is a sending periodicity of the control frame.

In this implementation, the product of the backoff count value and the first periodicity is equal to the first time interval, so that the second node can accurately obtain the first time interval.

In a possible implementation, the first indication information includes a frame type of the first frame, and the frame type of the first frame at least indicates that the first frame is a control frame used to determine the sleep start time.

In this implementation, the frame type of the first frame at least indicates that the first frame is a control frame used to determine the sleep start time, so that the second node determines, based on the frame type of the first frame, that the first frame is a control frame used to determine the sleep start time.

In a possible implementation, the method further includes: sending a second frame, where the second frame is used by the second node to maintain clock synchronization with the first node. The second frame may be named a heartbeat frame, or may have another name. This is not limited in this application.

In this implementation, the second frame is sent, so that the second node maintains clock synchronization with the first node by using the second frame. This facilitates quick restoration when the second node is woken up, that is, helps the second node enter a working state from the sleep state more quickly.

In a possible implementation, before sending the second frame, the method further includes: sending a third frame, where the third frame is at least used by the second node to determine the sleep start time, the sleep start time is a first moment, and a time interval between the first moment and a moment at which the second node receives the third frame is less than a time threshold.

In this implementation, the third frame is sent, and the third frame is at least used by the second node to determine the sleep start time. This can avoid a case that the second node cannot determine the sleep start time of the second node when not correctly receiving the first frame.

In a possible implementation, the third frame includes a frame type of the third frame and a backoff count value, the frame type of the third frame at least indicates that the third frame is a control frame used to determine the sleep start time, and the backoff count value in the third frame is at least used by the second node to determine the sleep start time.

In this implementation, the frame type of the third frame at least indicates that the third frame is a control frame used to determine the sleep start time, so that the second node determines, based on the frame type of the third frame, that the third frame is a control frame used to determine the sleep start time. The backoff count value in the third frame may allow the second node to determine the sleep start time of the second node.

In a possible implementation, the backoff count value in the third frame is 0.

In a possible implementation, the method further includes: receiving a fourth frame, where the fourth frame at least indicates that the second node correctly receives a control frame used to determine the sleep start time; and stopping sending a control frame that is at least used by the second node to determine the sleep start time.

In this implementation, after the fourth frame is received, sending of the control frame that is at least used by the second node to determine the sleep start time is stopped, so that signaling overheads can be reduced.

In a possible implementation, the fourth frame specifically indicates that the second node and each downstream node of the second node correctly receive a control frame used to determine the sleep start time.

In this implementation, after the fourth frame is received, sending of the control frame that is at least used by the second node to determine the sleep start time is stopped, so that signaling overheads can be reduced.

In a possible implementation, after stopping sending the control frame that is at least used by the second node to determine the sleep start time, the method further includes: entering a sleep state upon arrival of a target time point, where the target time point is a preset time point or the sleep start time.

In this implementation, upon arrival of the target time point, the sleep state is entered, so that power consumption can be reduced.

In a possible implementation, the first node is a primary node in a vehicle-mounted multi-node wired audio transmission system, and the second node is a secondary node in the vehicle-mounted multi-node wired audio transmission system. For example, a daisy chain topology is used between the primary node and a plurality of secondary nodes (including the second node) in the vehicle-mounted multi-node wired audio transmission system. For example, a star topology is used between the primary node and a plurality of secondary nodes (including the second node) in the vehicle-mounted multi-node wired audio transmission system.

In this implementation, the first frame is at least used by a secondary node in the vehicle-mounted multi-node wired audio transmission system to determine a sleep start time, so that the secondary node enters a sleep state upon arrival of the sleep start time, to reduce power consumption.

In a possible implementation, a quantity of second nodes is k, where k is an integer greater than 1, the first node is a node in a communication system, and the second node includes k nodes that have a synchronous sleep requirement in the communication system.

In a possible implementation, the method further includes: receiving a seventh frame, where the seventh frame at least indicates that the second node does not correctly receive the first frame.

In this implementation, the seventh frame is received, so that it can be learned that the second node does not correctly receive the first frame, so as to continue to send a control frame used by the second node to determine the sleep start time.

In a possible implementation, the method further includes: receiving an eighth frame, where the eighth frame at least indicates that the second node or at least one downstream node of the second node does not correctly receive the first frame.

In this implementation, the eighth frame is received, so as to continue to send a control frame used by the second node and the downstream node of the second node to determine a sleep start time.

According to a second aspect, an embodiment of this application provides another communication method. The method is applied to a second node, and the method includes: receiving a first frame transmitted through a channel, where the first frame is at least used to determine a sleep start time of the second node; and parsing the received first frame transmitted through the channel. That the first frame is at least used to determine the sleep start time of the second node may be replaced with the following: The first frame is at least used by the second node to determine the sleep start time. A first node and the second node are different.

In this embodiment of this application, the first frame is at least used to determine the sleep start time of the second node. The second node may parse the first frame to obtain the sleep start time of the second node, and enter a sleep state upon arrival of the sleep start time, to reduce power consumption.

In a possible implementation, the first frame is specifically used by the second node and one or more downstream nodes of the second node to determine a sleep start time.

In this implementation, the first frame is specifically used by the second node and the one or more downstream nodes of the second node to determine a sleep start time. The second node and the downstream node of the second node may parse the first frame to determine respective sleep start times, and enter the sleep state upon arrival of the sleep start times, to reduce power consumption.

In a possible implementation, a quantity of second nodes is k. In other words, the first frame is at least used to determine sleep start times of k second nodes, where k is an integer greater than 1.

In this implementation, the first frame is at least used by the k second nodes to determine the sleep start times. The k second nodes may parse the first frame to determine respective sleep start times, and enter the sleep state upon arrival of the sleep start times, to reduce power consumption.

In a possible implementation, the first frame includes first indication information and second indication information, the first indication information at least indicates that the first frame is a control frame used to determine the sleep start time, and the second indication information is at least used to determine the sleep start time.

In this implementation, the first indication information at least indicates that the first frame is a control frame used to determine the sleep start time, so that the second node can learn, based on the first indication information, that the first frame is a control frame used to determine the sleep start time. The second indication information is at least used to determine the sleep start time, so that the second node can determine the sleep start time of the second node based on the second indication information.

In a possible implementation, the second indication information includes a backoff count value, the backoff count value is associated with a first time interval, and the first time interval is equal to a time interval between a moment at which the second node receives the first frame and the sleep start time of the second node.

In this implementation, the backoff count value is associated with the first time interval, so that the second node obtains the first time interval based on the backoff count value, and then determines the sleep start time of the second node.

In a possible implementation, a product of the backoff count value and a first periodicity is equal to the first time interval, and the first periodicity is a sending periodicity of the control frame.

In this implementation, the product of the backoff count value and the first periodicity is equal to the first time interval, so that the second node can accurately obtain the first time interval based on the backoff count value.

In a possible implementation, the first indication information includes a frame type of the first frame, and the frame type of the first frame at least indicates that the first frame is a control frame used to determine the sleep start time.

In this implementation, the frame type of the first frame at least indicates that the first frame is a control frame used to determine the sleep start time, so that the second node can determine, based on the frame type of the first frame, that the first frame is a control frame used to determine the sleep start time.

In a possible implementation, the method further includes: receiving a second frame, where the second frame is at least used by the second node to maintain clock synchronization with a first node, and the first node is a source of the first frame. The source of the first frame is a node that first sends the first frame, but not a node that forwards the first frame.

In this implementation, the second node maintains clock synchronization with the first node by using the second frame. This facilitates quick restoration when the second node is woken up, that is, helps the second node enter a working state from the sleep state more quickly.

In a possible implementation, before receiving the second frame, the method further includes: receiving a third frame, where the third frame is at least used by the second node to determine the sleep start time, the sleep start time is a first moment, and a time interval between the first moment and a moment at which the second node receives the third frame is less than a time threshold.

In this implementation, the third frame is received, and the third frame is at least used by the second node to determine the sleep start time. This can avoid a case that the second node cannot determine the sleep start time of the second node when not correctly receiving the first frame.

In a possible implementation, the third frame includes a frame type of the third frame and a backoff count value, the frame type of the third frame at least indicates that the third frame is a control frame used to determine the sleep start time, and the backoff count value in the third frame is at least used by the second node to determine the sleep start time.

In this implementation, the frame type of the third frame at least indicates that the third frame is a control frame used to determine the sleep start time, so that the second node can determine, based on the frame type of the third frame, that the third frame is a control frame used to determine the sleep start time. The second node may determine the sleep start time of the second node based on the backoff count value in the third frame.

In a possible implementation, the method further includes: forwarding the received first frame transmitted through the channel.

In this implementation, the first frame is forwarded, so that a downstream node of the second node determines a sleep start time.

In a possible implementation, after forwarding the received first frame transmitted through the channel, the method further includes: sending a fourth frame, where the fourth frame at least indicates that the second node correctly receives a control frame used by the second node to determine the sleep start time.

In this implementation, the fourth frame is sent, to indicate that the second node correctly receives the control frame used by the second node to determine the sleep start time.

In a possible implementation, the fourth frame specifically indicates that the second node and each downstream node of the second node correctly receive a control frame used to determine the sleep start time.

In this implementation, the first node may be made to stop sending a control frame used by the second node to determine the sleep start time, so that signaling overheads can be reduced.

In a possible implementation, before sending the fourth frame, the method further includes: receiving a fifth frame, where the fifth frame at least indicates that each downstream node of the second node correctly receives the control frame used to determine the sleep start time. Sending the fourth frame includes: sending the fourth frame when the second node correctly receives the control frame used by the second node to determine the sleep start time.

In this implementation, when the second node and the downstream node of the second node correctly receive the control frame used to determine the sleep start time, the fourth frame is sent, so that the first node stops sending the control frame used by the second node to determine the sleep start time, to reduce signaling overheads.

In a possible implementation, the method further includes: forwarding the first frame when correctly receiving the first frame; or sending a sixth frame when not correctly receiving the first frame, where the sixth frame at least indicates that the second node does not correctly receive the first frame.

In this implementation, when the first frame is correctly received, the first frame is forwarded; or when the first frame is not correctly received, the sixth frame is sent. This can avoid forwarding the first frame that is not correctly received, to reduce signaling overheads.

In a possible implementation, the source of the first frame is a primary node in a vehicle-mounted multi-node wired audio transmission system, and the second node is a secondary node in the vehicle-mounted multi-node wired audio transmission system.

In this implementation, the first frame is at least used by a secondary node in the vehicle-mounted multi-node wired audio transmission system to determine a sleep start time, so that the secondary node enters a sleep state upon arrival of the sleep start time, to reduce power consumption.

In a possible implementation, a quantity of second nodes is k, where k is an integer greater than 1, the first node is a node in a communication system, and the second node includes k nodes that have a synchronous sleep requirement in the communication system.

In a possible implementation, the method further includes: sending a seventh frame, where the seventh frame at least indicates that the second node does not correctly receive the first frame.

In this implementation, the seventh frame is sent, so that the first node learns that the second node does not correctly receive the first frame, so as to continue to send a control frame used by the second node to determine the sleep start time.

In a possible implementation, the method further includes: sending an eighth frame, where the eighth frame at least indicates that the second node or at least one downstream node of the second node does not correctly receive the first frame.

In this implementation, the eighth frame is sent, so that the first node continues to send a control frame used by the second node and the downstream node of the second node to determine a sleep start time.

In a possible implementation, before sending the eighth frame, the method further includes: receiving a ninth frame, where the ninth frame indicates that at least one downstream node of the second node does not correctly receive a control frame used to determine the sleep start time; or determining that the second node does not correctly receive a control frame used to determine the sleep start time.

In a possible implementation, the method further includes: sending a tenth frame, where the tenth frame indicates that the second node correctly receives or does not correctly receive a control frame used to determine the sleep start time.

According to a third aspect, an embodiment of this application provides a communication apparatus. The communication apparatus has a function of implementing behavior in the method embodiment in the first aspect. The communication apparatus may be a network device, may be a component (for example, a processor, a chip, or a chip system) of the network device, or may be a logical module or software that can implement all or some functions of the network device. Alternatively, the communication apparatus may be a terminal device, may be a component (for example, a processor, a chip, or a chip system) of the terminal device, or may be a logical module or software that can implement all or some functions of the terminal device. Functions of the communication apparatus may be implemented by hardware, or may be implemented by hardware executing corresponding software. The hardware or the software includes one or more modules or units corresponding to the foregoing functions. The communication apparatus may be the first node in the first aspect. In a possible implementation, the communication apparatus includes a transceiver module and a processing module. The processing module is configured to generate a first frame, where the first frame is at least used to determine a sleep start time of a second node. The transceiver module is configured to send the first frame.

In a possible implementation, the transceiver module is further configured to send a second frame, where the second frame is used by the second node to maintain clock synchronization with the communication apparatus (namely, the first node).

In a possible implementation, the transceiver module is further configured to send a third frame, where the third frame is at least used by the second node to determine the sleep start time, the sleep start time is a first moment, and a time interval between the first moment and a moment at which the second node receives the third frame is less than a time threshold.

In a possible implementation, the transceiver module is further configured to receive a fourth frame, where the fourth frame at least indicates that the second node correctly receives a control frame used to determine the sleep start time. The processing module is further configured to control the transceiver module to stop sending a control frame that is at least used by the second node to determine the sleep start time.

In a possible implementation, the processing module is further configured to: upon arrival of a target time point, control the communication apparatus to enter a sleep state, where the target time point is a preset time point or the sleep start time.

In a possible implementation, the transceiver module is further configured to receive a seventh frame, where the seventh frame at least indicates that the second node does not correctly receive the first frame.

In a possible implementation, the transceiver module is further configured to receive an eighth frame, where the eighth frame at least indicates that the second node or at least one downstream node of the second node does not correctly receive the first frame.

For possible implementations of the communication apparatus in the third aspect, refer to the possible implementations of the first aspect.

For technical effects brought by the possible implementations of the third aspect, refer to the descriptions of the technical effects of the first aspect or the possible implementations of the first aspect.

According to a fourth aspect, an embodiment of this application provides a communication apparatus. The communication apparatus has a function of implementing behavior in the method embodiment in the second aspect. The communication apparatus may be a network device, may be a component (for example, a processor, a chip, or a chip system) of the network device, or may be a logical module or software that can implement all or some functions of the network device. Alternatively, the communication apparatus may be a terminal device, may be a component (for example, a processor, a chip, or a chip system) of the terminal device, or may be a logical module or software that can implement all or some functions of the terminal device. Functions of the communication apparatus may be implemented by hardware, or may be implemented by hardware executing corresponding software. The hardware or the software includes one or more modules or units corresponding to the foregoing functions. The communication apparatus may be the second node in the second aspect. In a possible implementation, the communication apparatus includes a transceiver module and a processing module. The transceiver module is configured to receive a first frame transmitted through a channel, where the first frame is at least used to determine a sleep start time of the second node. The processing module is configured to parse the received first frame transmitted through the channel.

In a possible implementation, the transceiver module is further configured to receive a second frame, where the second frame is at least used by the second node to maintain clock synchronization with a first node, and the first node is a source of the first frame. The source of the first frame is a node that first sends the first frame, but not a node that forwards the first frame.

In a possible implementation, the transceiver module is further configured to receive a third frame, where the third frame is at least used by the second node to determine the sleep start time, the sleep start time is a first moment, and a time interval between the first moment and a moment at which the second node receives the third frame is less than a time threshold.

In a possible implementation, the transceiver module is further configured to forward the received first frame transmitted through the channel.

In a possible implementation, the transceiver module is further configured to send a fourth frame, where the fourth frame at least indicates that the second node correctly receives a control frame used by the second node to determine the sleep start time.

In a possible implementation, the fourth frame specifically indicates that the second node and each downstream node of the second node correctly receive a control frame used to determine the sleep start time.

In a possible implementation, the transceiver module is further configured to receive a fifth frame, where the fifth frame at least indicates that each downstream node of the second node correctly receives the control frame used to determine the sleep start time. The processing module is further configured to: when the second node correctly receives the control frame used by the second node to determine the sleep start time, control the transceiver module to send the fourth frame.

In a possible implementation, the processing module is further configured to: when the first frame is correctly received, control the transceiver module to forward the first frame; or when the first frame is not correctly received, control the transceiver module to send a sixth frame, where the sixth frame at least indicates that the second node does not correctly receive the first frame.

In a possible implementation, the transceiver module is further configured to send a seventh frame, where the seventh frame at least indicates that the second node does not correctly receive the first frame.

In a possible implementation, the transceiver module is further configured to send an eighth frame, where the eighth frame at least indicates that the second node or at least one downstream node of the second node does not correctly receive the first frame.

In a possible implementation, the transceiver module is further configured to receive a ninth frame, where the ninth frame indicates that at least one downstream node of the second node does not correctly receive a control frame used to determine the sleep start time.

In a possible implementation, the processing module is further configured to determine that the second node does not correctly receive a control frame used to determine the sleep start time.

In a possible implementation, the transceiver module is further configured to send a tenth frame, where the tenth frame indicates that the second node correctly receives or does not correctly receive a control frame used to determine the sleep start time.

For possible implementations of the communication apparatus in the fourth aspect, refer to the possible implementations of the second aspect.

For technical effects brought by the possible implementations of the fourth aspect, refer to the descriptions of the technical effects of the second aspect or the possible implementations of the second aspect.

According to a fifth aspect, an embodiment of this application provides another communication apparatus. The communication apparatus includes one or more processors, and the one or more processors are configured to process data and/or information, so that the method in the first aspect or any one of the possible implementations of the first aspect is implemented, or the method in the second aspect or any one of the possible implementations of the second aspect is implemented.

Optionally, the communication apparatus further includes a memory, the memory stores a program or instructions, and when the program or the instructions are executed by the processor, the communication apparatus is enabled to perform the method in any one of the first aspect and the second aspect. For example, the communication apparatus may be a chip, the processor is a processing unit in the chip, and the memory is a random access memory or a cache in the chip.

In this embodiment of this application, in a process of performing the foregoing method, a process related to sending of information (or a signal) in the method may be understood as a process of outputting information based on an instruction of the processor. When outputting information, the processor outputs the information to a transceiver, so that the transceiver transmits the information. After the information is output by the processor, other processing may be performed on the information before the information reaches the transceiver. Similarly, when the processor receives input information, the transceiver receives the information, and inputs the information to the processor. Further, after the transceiver receives the information, other processing may be performed on the information before the information is input to the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor, that executes computer instructions in the memory to perform these methods. For example, the processor may be further configured to execute a program stored in the memory. When the program is executed, the communication apparatus is enabled to perform the method in the first aspect or any possible implementation of the first aspect.

In a possible implementation, the memory is located outside the communication apparatus. In a possible implementation, the memory is located in the communication apparatus.

In a possible implementation, the processor and the memory may alternatively be integrated into one device. In other words, the processor and the memory may alternatively be integrated together.

In a possible implementation, the communication apparatus further includes a transceiver. The transceiver is configured to receive a signal, send a signal, or the like.

According to a sixth aspect, this application provides another communication apparatus. The communication apparatus includes a processing circuit and an interface circuit, the interface circuit is configured to obtain data or output data, and the processing circuit is configured to perform the method in any one of the first aspect and the second aspect.

According to a seventh aspect, this application provides a computer-readable storage medium. The computer-readable storage medium stores a computer program, the computer program includes program instructions, and when the program instructions are executed, a computer is enabled to perform the method in any one of the first aspect and the second aspect.

According to an eighth aspect, this application provides a computer program product. The computer program product includes a computer program, the computer program includes program instructions, and when the program instructions are executed, a computer is enabled to perform the method in any one of the first aspect and the second aspect.

According to a ninth aspect, this application provides a chip, including a communication interface and a processor. The communication interface is configured to receive and send a signal of the chip. The processor is configured to execute computer program instructions, to enable a communication apparatus including the chip to perform the method in any one of the first aspect and the second aspect.

According to a tenth aspect, an embodiment of this application provides a communication system, including the communication apparatus in the third aspect or any possible implementation of the third aspect, and the communication apparatus in the fourth aspect or any possible implementation of the fourth aspect.

### BRIEF DESCRIPTION OF DRAWINGS

To describe technical solutions in embodiments of this application or in the background more clearly, the following describes accompanying drawings for describing embodiments of this application or the background.
FIG. 1 is a block diagram of a communication system 100 according to an embodiment of this application;
FIG. 2 shows an example of a vehicle-mounted multi-node wired audio transmission system according to an embodiment of this application;
FIG. 3 is a block diagram of a communication system 300 according to an embodiment of this application;
FIG. 4 shows an example of another vehicle-mounted multi-node wired audio transmission system according to an embodiment of this application;
FIG. 5 is an interaction flowchart of a communication method according to an embodiment of this application;
FIG. 6A shows an example of a diagram of a frame structure of a first frame according to an embodiment of this application;
FIG. 6B shows an example of a diagram of another frame structure of a first frame according to an embodiment of this application;
FIG. 7 is an interaction flowchart of another communication method according to an embodiment of this application;
FIG. 8A and FIG. 8B are an interaction flowchart of another communication method according to an embodiment of this application;
FIG. 9A to FIG. 9C are an interaction flowchart of another communication method according to an embodiment of this application;
FIG. 10 is a diagram of a first upstream frame according to an embodiment of this application;
FIG. 11A to FIG. 11C are an interaction flowchart of another communication method according to an embodiment of this application;
FIG. 12A to FIG. 12C are an interaction flowchart of another communication method according to an embodiment of this application;
FIG. 13A and FIG. 13B are an interaction flowchart of another communication method according to an embodiment of this application;
FIG. 14 is a diagram of a structure of a communication apparatus 1400 according to an embodiment of this application;
FIG. 15 is a diagram of a structure of another communication apparatus 150 according to an embodiment of this application; and
FIG. 16 is a diagram of a structure of another communication apparatus 160 according to an embodiment of this application.

### DESCRIPTION OF EMBODIMENTS

In the specification, claims, and accompanying drawings of this application, the terms "first", "second", and the like are merely intended to distinguish between different objects but do not indicate a particular order. It may be understood that various numbers in embodiments of this application are merely used for differentiation for ease of description, and are not used to limit the scope of embodiments of this application. Sequence numbers of the foregoing processes do not mean a performing sequence, and the sequence of performing the processes should be determined based on functions and internal logic of the processes. In addition, the terms "include", "have", and any variants thereof are intended to cover a non-exclusive inclusion. For example, a process, a method, a system, a product, a device, or the like that includes a series of steps or units is not limited to the listed steps or units, but optionally further includes a step, a unit, or the like that is not listed, or optionally further includes another step or unit inherent to the process, the method, the product, the device, or the like.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in the specification may be combined with another embodiment.

Terms used in the following embodiments of this application are merely intended to describe specific embodiments, but are not intended to limit this application. The expressions "one", "a", "the", "the foregoing", "this", and "the one" of singular forms used in this specification and the appended claims of this application are also intended to include plural forms, unless otherwise specified in the context clearly. It should be further understood that the term "and/or" used in this application means and includes any or all possible combinations of one or more listed items. For example, "A and/or B" may indicate three cases: Only A exists, only B exists, and both A and B exist, where A and B may be singular or plural. The term "a plurality of" used in this application means two or more. In text descriptions of this application, the character "/" generally indicates an "or" relationship between associated objects.

It may be understood that, in embodiments of this application, "B corresponding to A" indicates that there is a correspondence between A and B, and B may be determined based on A. However, it should be further understood that determining (or generating) B based on (or according to) A does not mean that B is determined (or generated) based on (or according to) only A, and B may alternatively be determined (or generated) based on (or according to) A and/or other information.

It should be understood that, in this application, an indication includes a direct indication (which is also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based on only the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, "a network element A sends information A to a network element B" may be understood as that a destination end of the information A or an intermediate network element in a transmission path to the destination end is the network element B, and may include directly or indirectly sending the information to the network element B. "The network element B receives the information A from the network element A" may be understood as that a source end of the information A or an intermediate network element in a transmission path from the source end is the network element A, and may include directly or indirectly receiving the information from the network element A. Information may undergo necessary processing between a source end sending the information and a destination end, for example, a format change. However, the destination end may understand valid information from the source end. Similar descriptions in this application may be understood similarly. Details are not described herein.

For ease of understanding solutions of this application, the following first describes terms and technical solutions in embodiments of this application.

A cockpit domain controller (cockpit domain controller or control domain cockpit, CDC) may also be referred to as a head unit. Functions of the head unit may include functions such as a radio, music and video playing, and navigation in a cockpit, and may further include a communication function (4G, 5G, and the like), to implement information communication between a human and a vehicle and between the vehicle and the outside, to enhance user experience and functions related to services and safety.

A primary node and a secondary node are two types of communication apparatuses that have a communication function and that are distinguished in terms of logical functions. The primary node is a communication apparatus that can communicate with the secondary node and has a capability of managing the secondary node (for example, scheduling resources for the secondary node). For example, the primary node may manage resources of a communication domain, and has a function of scheduling resources for a communication link between the primary node and the secondary node. The secondary node is an apparatus that can obey management of the primary node and has a capability of performing communication by using resources allocated by the primary node. The primary node or the secondary node may be various communication apparatuses. For example, the primary node is a head unit, the secondary node is a speaker or a microphone, and a communication connection is established between the head unit and the speaker or the microphone to implement data interaction. The head unit manages the speaker or the microphone. For another example, the primary node is a mobile phone, the secondary node is a headset, and a communication connection is established between the mobile phone and the headset to implement data interaction. The mobile phone manages the headset, and the mobile phone has a function of allocating resources, and may allocate, for the headset, resources for communicating with the mobile phone.

A communication domain is a system including a group of communication apparatuses that have a communication relationship and the communication relationship between the communication apparatuses. The communication relationship is a relationship in which the communication apparatuses can communicate with each other. Generally, one communication domain includes one primary node and at least one secondary node, and the primary node and the secondary node communicate with each other by using resources scheduled by the primary node. For example, in a communication domain, a CDC is a primary node, and a vehicle-mounted sound box, a microphone, and the like are secondary nodes.

The following describes a communication system to which the technical solutions provided in this application are applicable.

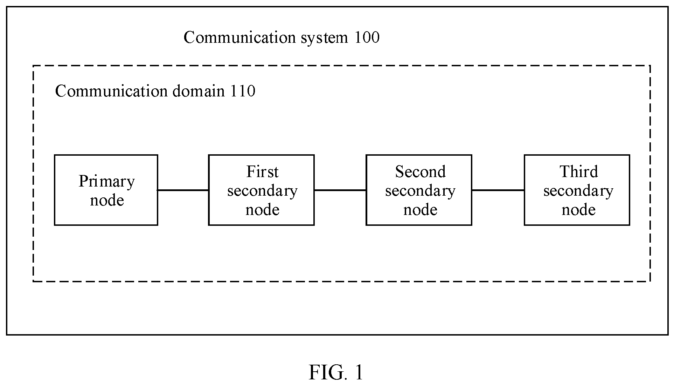

FIG. 1 is a block diagram of a communication system 100 according to an embodiment of this application. The communication system 100 includes at least one communication domain. FIG. 1 shows a communication domain 110. The communication domain 110 includes a primary node and a plurality of secondary nodes (only three secondary nodes, namely, a first secondary node, a second secondary node, and a third secondary node, are shown). A daisy chain (daisy chain) topology is used between the primary node and the plurality of secondary nodes. The communication domain 110 shown in FIG. 1 is merely an example. The communication domain 110 shown in FIG. 1 may include more or fewer nodes. A quantity of secondary nodes in the communication domain 110 is limited in this application. The primary node can communicate with the secondary nodes and may manage the secondary nodes. Some or all of the nodes in the communication system 100 have a requirement of synchronously entering a sleep state (which may be referred to as a dormant state). In this application, a plurality of nodes synchronously entering the sleep state means that the plurality of nodes enter the sleep state within one sending periodicity of a communication frame (a data frame or a control frame). For example, the primary node sends a communication frame at a periodicity of 20.83 µs, that is, sends one communication frame every 20.83 µs, and the secondary node forwards a received communication frame once approximately every 20.83 µs. A plurality of secondary nodes managed by the primary node synchronously entering the sleep state may mean that the plurality of secondary nodes all enter the sleep state within 20.83 µs after forwarding a same communication frame. A plurality of secondary nodes managed by the primary node asynchronously entering the sleep state may mean that some of the plurality of secondary nodes enter the sleep state after forwarding a communication frame #1 for the first time and before forwarding a communication frame again (next time), and not all secondary nodes enter the sleep state within a sending periodicity of a same communication frame. In this example, a secondary node that enters the sleep state later (for example, a speaker) may play abnormal data, causing noise to affect user experience and increasing power consumption. It can be learned that, in comparison with asynchronous entry of a plurality of nodes in the communication system into the sleep state, synchronous entry of the plurality of nodes into the sleep state can further enhance user experience and reduce power consumption.

For example, the primary node and some or all of the secondary nodes in the communication system 100 perform data transmission when there is data service transmission, and the primary node (optional) and some or all of the secondary nodes enter the sleep state when there is no data service transmission. This can reduce power consumption of the system. It can be learned that the plurality of nodes in this example have a requirement of synchronously entering the sleep state.

The communication domain 110 may be applied to a plurality of environments. This is not limited in embodiments of this application.

In a possible implementation, the communication domain 110 may be applied to a cabin (also referred to as a vehicle cabin) environment of a motor vehicle (for example, an intelligent vehicle or an electric vehicle) or the like.

In another possible implementation, the communication domain 110 may be applied to an intelligent terminal device, for example, an intelligent device used in a smart home environment.

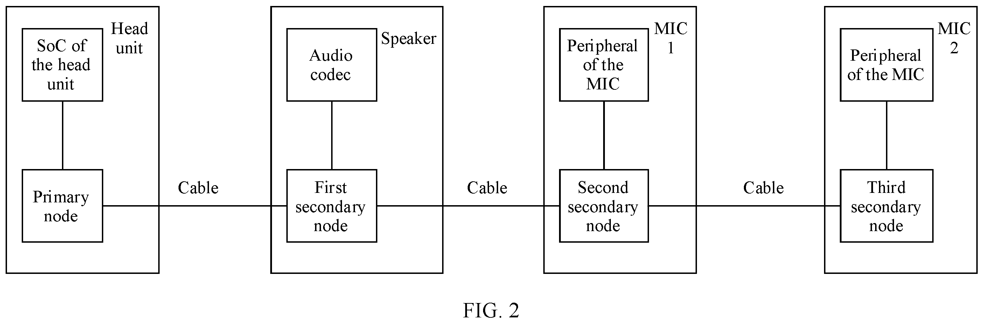

FIG. 2 shows an example of a vehicle-mounted multi-node wired audio transmission system according to an embodiment of this application. The vehicle-mounted multi-node wired audio transmission system shown in FIG. 2 is an example of the communication system 100. In the vehicle-mounted multi-node wired audio transmission system, a daisy chain topology is used between the primary node and the plurality of secondary nodes. A host (host) is connected to the primary node, and communicates, through the primary node, with peripherals (for example, a speaker and a microphone) connected to the plurality of secondary nodes. As shown in FIG. 2, an SoC of a head unit serves as the host and is connected to the primary node, an audio codec (Code decode, Codec) is connected to the first secondary node, a peripheral of a microphone (microphone, MIC) 1 is connected to the second secondary node, and a peripheral of a MIC 2 is connected to the third secondary node. In FIG. 2, the primary node and the secondary node are connected through a cable, and the secondary nodes are connected through a cable. Refer to FIG. 2. A to-be-played audio signal is sent by the host to the audio codec through the primary node-the first secondary node; an audio signal collected by the MIC 1 is transferred to the host through the second secondary node-the first secondary node-the primary node; and an audio signal collected by the MIC 2 is transferred to the host through the third secondary node-the second secondary node-the first secondary node-the primary node. When there is no data service transmission in the vehicle-mounted multi-node wired audio transmission system, if a node in the system sleeps, power consumption of the system can be reduced. A plurality of secondary nodes in the vehicle-mounted multi-node wired audio transmission system have a requirement of synchronously entering the sleep state.

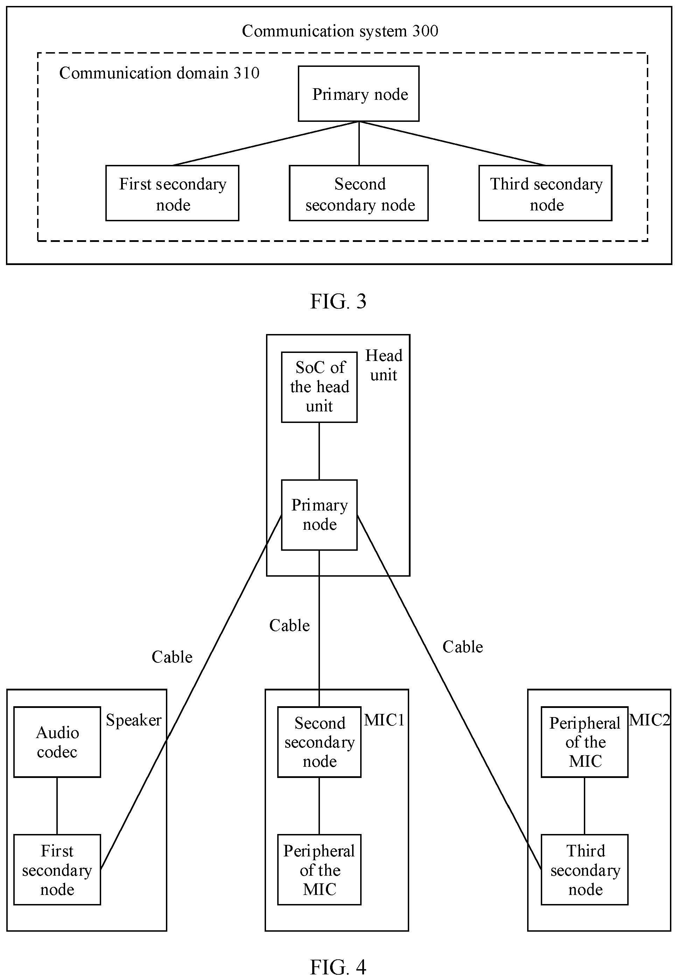

FIG. 3 is a block diagram of a communication system 300 according to an embodiment of this application. The communication system 300 includes at least one communication domain. FIG. 3 shows a communication domain 310. The communication domain 310 includes a primary node and a plurality of secondary nodes (only three secondary nodes, namely, a first secondary node, a second secondary node, and a third secondary node, are shown). A star topology is used between the primary node and the plurality of secondary nodes. In other words, the primary node directly communicates with each secondary node. The communication domain 310 shown in FIG. 3 is merely an example. The communication domain 310 shown in FIG. 3 may include more or fewer nodes. A quantity of secondary nodes in the communication domain 310 is limited in this application. The primary node can communicate with the secondary nodes and may manage the secondary nodes. Some or all of the secondary nodes in the communication system 300 have a requirement of synchronously entering a sleep state (which may be referred to as a dormant state). For example, the primary node and some or all of the secondary nodes in the communication system 300 perform data transmission when there is data service transmission, and the primary node (optional) and some or all of the secondary nodes enter the sleep state when there is no data service transmission. This can reduce power consumption of the system. It can be learned that the plurality of nodes in this example have a requirement of synchronously entering the sleep state.

The communication domain 310 may be applied to a plurality of environments. This is not limited in embodiments of this application.

In a possible implementation, the communication domain 310 may be applied to a cabin (also referred to as a vehicle cabin) environment of a motor vehicle (for example, an intelligent vehicle or an electric vehicle) or the like.

In another possible implementation, the communication domain 310 may be applied to an intelligent terminal device, for example, an intelligent device used in a smart home environment.

FIG. 4 shows an example of another vehicle-mounted multi-node wired audio transmission system according to an embodiment of this application. The vehicle-mounted multi-node wired audio transmission system shown in FIG. 4 is an example of the communication system 300. In the vehicle-mounted multi-node wired audio transmission system shown in FIG. 4, the star topology is used between the primary node and the plurality of secondary nodes. For example, the primary node is connected to each secondary node through a cable. An SoC of a head unit serves as a host and is connected to the primary node, an audio codec is connected to the first secondary node, a peripheral of a MIC 1 is connected to the second secondary node, and a peripheral of a MIC 2 is connected to the third secondary node. The primary node is separately connected to the first secondary node, the second secondary node, and the third secondary node through a cable. Refer to FIG. 4. A to-be-played audio signal is sent by the host to the audio codec through the primary node-the first secondary node; an audio signal collected by the MIC 1 is transferred to the host through the second secondary node-the primary node; and an audio signal collected by the MIC 2 is transferred to the host through the third secondary node-the primary node. When there is no data service transmission in the vehicle-mounted multi-node wired audio transmission system, if a node in the system sleeps, power consumption of the system can be reduced. A plurality of nodes in the vehicle-mounted multi-node wired audio transmission system have a requirement of synchronously entering the sleep state.

The primary node and the secondary node may communicate with each other in a plurality of manners. This is not limited in embodiments of this application. For example, the primary node may communicate with the secondary node in a wireless manner. For another example, the primary node may communicate with the secondary node in a wired manner. It should be noted that the wired manner may be that a data line is used for connection, an internal bus is used for connection, or a cable is used for connection, to implement communication.

It should be noted that the wireless manner may be that communication is implemented through a communication network. The communication network may be a local area network, or may be a wide area network connected through a relay (relay) device, or may include a local area network and a wide area network. When the communication network is a local area network, the communication network may be, for example, a Wi-Fi hotspot network, a Bluetooth network, a zigbee (zigbee) network, a near field communication (near field communication, NFC) network, or a future possible universal short-range communication network. When the communication network is a wide area network, the communication network may be, for example, a 4th generation mobile communication technology (4th generation mobile communication technology, 4G) network, a 5th generation mobile communication technology (5th generation mobile communication technology, 5G) network, a public land mobile network (public land mobile network, PLMN), the Internet, or even a 6th generation or 7th generation mobile communication technology. This is not limited in embodiments of this application.

It should be noted that the primary node in embodiments of this application may have a plurality of forms, and may also be referred to as a control apparatus or a control device. This is not specifically limited in embodiments of this application.

In a possible implementation, the primary node may be an independent device.

In another possible implementation, the primary node may be integrated in a device as a functional module or a chip apparatus.

For example, the primary node may be an evolved NodeB (evolved NodeB, eNB or eNodeB) in a long term evolution (long term evolution, LTE) system, may be a wireless controller in a cloud radio access network (cloud radio access network, CRAN) scenario, may be a relay station, an access point, a vehicle-mounted device, a wearable device, an access device in a 5G network, a network device in a future evolved PLMN, or the like, may be an access point (access point, AP) in a wireless local area network (wireless local area network, WLAN), may be a gNB in a new radio (new radio, NR) system, may be a control device or a control apparatus (for example, a head unit) in a cabin domain, or may be a control device or a control apparatus in a scenario including an intelligent terminal device. This is not limited in embodiments of this application.

It should be further noted that the secondary node may have a plurality of forms, and may also be referred to as a terminal or a terminal apparatus. This is not limited in embodiments of this application.

In a possible implementation, the secondary node may be an independent device.

In another possible implementation, the secondary node may be integrated in a device as a functional module or a chip apparatus.

Specifically, the secondary node may be an apparatus having a communication function (or a capability of receiving and sending data), for example, a speaker, a microphone, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in self driving (self driving), a cellular phone, a cordless phone, a session initiation protocol (session initiation protocol, SIP) phone, a personal digital assistant (personal digital assistant, PDA), a handheld device having a wireless communication function, a computing device, a vehicle-mounted device, a smart home device, a wearable device, a terminal device in a 5G network, a terminal device in a future evolved PLMN, or the like. This is not limited in embodiments of this application. The wearable device may also be referred to as a wearable intelligent device, and is a general term of a wearable device that is intelligently designed and developed for daily wear by using a wearable technology, for example, glasses, gloves, a watch, clothing, or shoes. The wearable device is a portable device that is directly worn on a body or integrated into clothes or an accessory of a user.

In a possible implementation, an example in which the communication domain 110 or the communication domain 310 is applicable to a cabin domain environment is used. Based on a relationship between a secondary node and a cabin, the secondary node may include the following two terminal types: a "vehicle-mounted terminal device" and a "non-vehicle-mounted terminal device".

The "vehicle-mounted terminal device", also referred to as an on-board unit (on-board unit, OBU), is a device that is integrated into or installed in a cabin domain and is a part of the cabin domain, for example, a vehicle-mounted speaker, a vehicle-mounted microphone, a vehicle-mounted display, or a vehicle-mounted camera. In general, the vehicle-mounted terminal device may be a device factory-installed (factory-installed) on a vehicle by a vehicle manufacturer.

The "non-vehicle-mounted terminal device" is a device that is placed in the cabin domain and can communicate with or connect to another device in the cabin domain, but is not a part of the cabin, for example, a smartphone, a tablet computer, a Bluetooth headset, or a wearable device of a user.

In a possible implementation, the primary node may be a CDC, the CDC may communicate with a plurality of secondary nodes, and the plurality of secondary nodes may include at least one terminal type of the vehicle-mounted terminal device or the non-vehicle-mounted terminal device.

When there is no data service transmission in one or more nodes in the communication system, power consumption of the communication system can be reduced by controlling the one or more nodes to enter the sleep state. In comparison with asynchronous entry of a plurality of nodes in the communication system into the sleep state, synchronous entry of the plurality of nodes into the sleep state can further prevent some nodes from transmitting an invalid communication frame and reduce power consumption. This application provides a technical solution of controlling a node in a communication system to enter a sleep state, to reduce power consumption. Further, this application provides a technical solution of controlling a plurality of nodes in the communication system to synchronously enter the sleep state, to prevent some nodes from transmitting an invalid communication frame and reduce power consumption.

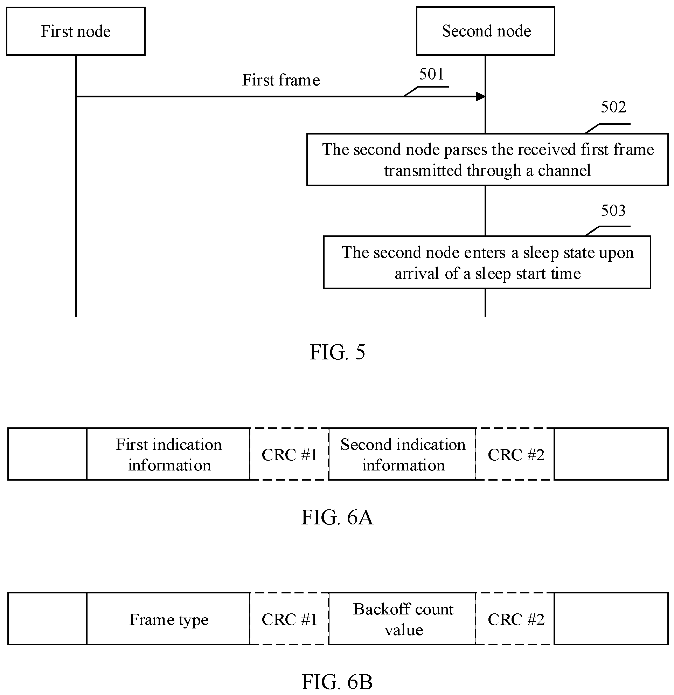

FIG. 5 is an interaction flowchart of a communication method according to an embodiment of this application. A method procedure in FIG. 5 is applicable to the communication system 100 shown in FIG. 1 or the communication system 300 shown in FIG. 3. For example, a first node in FIG. 5 is the primary node in FIG. 1, and a second node in FIG. 5 is the first secondary node in FIG. 1. For another example, the first node in FIG. 5 is the primary node in FIG. 3, and the second node in FIG. 5 is the first secondary node in FIG. 3. An example of a communication system (including nodes in FIG. 5) corresponding to the nodes in FIG. 5 is the vehicle-mounted multi-node wired audio transmission system shown in FIG. 2 or FIG. 4. As shown in FIG. 5, the method includes the following steps.

501: The first node sends a first frame to the second node.

Correspondingly, the second node receives the first frame from the first node. The first frame is at least used to determine a sleep start time of the second node. In other words, the first frame is at least used by the second node to determine the sleep start time. The first frame may be named a sleep frame or a sleep controller, or may have another name. This is not limited in this application. The first frame may be a control frame predefined (newly defined) in this application, and the control frame is at least used to determine sleep start times of one or more nodes. Alternatively, the first frame may be that first indication information and second indication information below are added based on an existing control frame or data frame. For example, a control field including the first indication information and a control field including the second indication information are added. Alternatively, the first frame may be that the first indication information and the second indication information are represented by using reserved bits based on an existing control frame or data frame. Alternatively, the first frame may be that one of the first indication information and the second indication information is added and the other of the first indication information and the second indication information is represented by using a reserved bit based on an existing control frame or data frame.

In a possible implementation, the first frame is specifically used by the second node and one or more downstream nodes of the second node to determine a sleep start time. After receiving the first frame, the second node may forward the first frame to a downstream node of the second node, namely, a third node. The third node may forward the first frame to a downstream node of the third node, and so on. In this way, the second node and each downstream node of the second node can receive the first frame. For example, the first node is a primary node in a communication system, the second node is a secondary node in the communication system, and a time offset (offset) between sleep start times determined by any two of each downstream node of the second node and the second node is less than a sending periodicity of a communication frame in the communication system, for example, 20.83 µs. In this example, sleep start times determined by the second node and the one or more downstream nodes of the second node are substantially the same. In this way, the second node and the one or more downstream nodes of the second node enter a sleep state after the respectively-determined sleep start times, so that the second node and the one or more downstream nodes of the second node can synchronously sleep, that is, sleep at the same time, to reduce power consumption. In this implementation, the first frame is specifically used by the second node and the one or more downstream nodes of the second node to determine a sleep start time, so that the second node and the one or more downstream nodes of the second node determine respective sleep start times, and enter the sleep state upon arrival of the sleep start times, to reduce power consumption.

In a possible implementation, a quantity of second nodes is k. In other words, the first frame is at least used to determine sleep start times of k second nodes, where k is an integer greater than 1. The k second nodes may include a second node #1, a second node #2, ..., and a second node #k. The second node #1 is an upstream node of the second node #2, the second node #2 is a node of the second node #3, ..., and the second node #(k-1) is an upstream node of the second node #k. After receiving the first frame, the second node #1 may forward the first frame to a downstream node of the second node #1, namely, the second node #2. The second node #2 may forward the first frame to the second node #3, and so on. The k second nodes may determine respective sleep start times based on the first frame. For example, the first node is a primary node in a communication system, the k second nodes are k secondary nodes in the communication system, and a time offset (offset) between sleep start times determined by any two of the k second nodes is less than a sending periodicity of a communication frame (for example, a control frame below) in the communication system, for example, 20.83 µs. In this example, the first frame is at least used by the k second nodes to determine sleep start times, and the sleep start times determined by the k second nodes are substantially the same. In this way, the k second nodes enter the sleep state after the respectively-determined sleep start times, so that the k second nodes can synchronously sleep, to reduce power consumption. In this implementation, the first frame is at least used by the k second nodes to determine sleep start times, so that the k second nodes determine respective sleep start times, and enter the sleep state upon arrival of the sleep start times, to reduce power consumption.

In a possible implementation, the first node periodically sends a control frame that is at least used by the second node to determine the sleep start time. In this specification, the control frame that is at least used by the second node to determine the sleep start time may be briefly referred to as a sleep frame. For example, the first node sends a sleep frame once at an interval of 20.83 µs (that is, a first periodicity is 20.83 µs), a backoff count value in a control frame sent by the first node for the first time is N, a backoff count value in a control frame sent for the second time is (N-1), a backoff count value in a control frame sent for the third time is (N-2), ..., a backoff count value in a control frame sent for the N^{th} time is 1, and a backoff count value in a control frame sent for the (N+1)^{th} time is 0. The first frame in FIG. 5 may be the control frame sent by the first node for the first time in this example, and a third frame below may be the control frame sent by the first node for the (N+1)^{th} time in this example. The second node may determine the sleep start time of the second node based on a correctly received control frame. For example, the backoff count value in the control frame #1 sent by the first node for the first time is N, where N is an integer greater than 0; the second node calculates a product of the first periodicity and the backoff count value N, to obtain a time offset #1; and the second node shifts a moment at which the second node receives the control frame #1 backward by the time offset #1, to obtain the sleep start time. For another example, the backoff count value in the control frame #N sent by the first node for the N^{th} time is 1, where N is an integer greater than 0; the second node calculates a product of the first periodicity and the backoff count value 1, to obtain a time offset #N, that is, the first periodicity; and the second node shifts a moment at which the second node receives the control frame #N backward by the time offset #N, to obtain the sleep start time.

502: The second node parses the received first frame transmitted through a channel.

In a possible implementation, when correctly receiving the first frame, the second node determines the sleep start time of the second node based on the first frame, and enters the sleep state upon arrival of the sleep start time; or when not correctly receiving the first frame, the second node determines the sleep start time of the second node based on a correctly received control frame used by the second node to determine the sleep start time. The second node may parse each control frame that is received by the second node and that is used by the second node to determine the sleep start time, and determine the sleep start time based on a correctly received control frame. For example, the second node parses each control frame that is received by the second node and that is used by the second node to determine the sleep start time, determines, after correctly receiving a control frame, the sleep start time based on a backoff count value in the control frame, and no longer determines the sleep start time by using a subsequently correctly received control frame.

An example in which the second node determines the sleep start time of the second node based on the first frame is as follows: A backoff count value in the first frame is N, where N is an integer greater than 0. The second node parses the first frame, to obtain first indication information; learns, based on the first indication information, that the first frame includes the backoff count value; calculates a product of the first periodicity and the backoff count value N, to obtain a first time interval; and uses a second moment after a moment at which the second node receives the first frame as the sleep start time of the second node, where an interval between the second moment and the moment at which the second node receives the first frame is the first time interval. In other words, an example in which the second node determines the sleep start time of the second node based on the first frame is as follows: The backoff count value in the first frame is N. The second node parses the first frame, to obtain the first indication information; learns, based on the first indication information, that the first frame includes the backoff count value; calculates the product of the first periodicity and the backoff count value N, to obtain a first time offset; and shifts the moment at which the second node receives the first frame backward by the first time offset, to obtain the sleep start time of the second node.

503: The second node enters the sleep state upon arrival of the sleep start time.

In this embodiment of this application, the first frame is at least used to determine the sleep start time of the second node, so that the second node determines the sleep start time of the second node, and enters the sleep state upon arrival of the sleep start time, to reduce power consumption.

The following describes information that may be included in the first frame and an implementation in which the first frame is at least used by the second node to determine the sleep start time.

In a possible implementation, the first frame includes first indication information and second indication information, the first indication information at least indicates that the first frame is a control frame used to determine the sleep start time, and the second indication information is at least used to determine the sleep start time. The first indication information may be understood as a sleep indication, for example, indicating the second node to start sleep control. For example, after parsing the first frame to obtain the first indication information, the second node may learn, based on the first indication information, that the first frame includes the second indication information, and then obtain the sleep start time of the second node based on the second indication information. In this implementation, the first indication information at least indicates that the first frame is a control frame used to determine the sleep start time, so that the second node learns, based on the first indication information, that the first frame is a control frame used to determine the sleep start time. The second indication information is at least used to determine the sleep start time, so that the second node determines the sleep start time of the second node based on the second indication information.

In a possible implementation, the second indication information includes a backoff count value (which may be referred to as a backoff counter), the backoff count value is associated with a first time interval, and the first time interval is equal to a time interval between a moment at which the second node receives the first frame and the sleep start time of the second node. An example in which the backoff count value is associated with the first time interval is as follows: The backoff count value is positively correlated with the first time interval. The backoff count value may indicate a quantity of remaining sleep frames to be sent by the first node, and the second node sleeps after the first node sends a last sleep frame. The second node may obtain the first time interval based on the backoff count value. For example, a product of the backoff count value and a first periodicity is equal to the first time interval, and the first periodicity is a sending periodicity of the control frame, for example, 20.83 µs. The first periodicity is not limited in this application. FIG. 6A shows an example of a diagram of a frame structure of a first frame according to an embodiment of this application. As shown in FIG. 6A, the first frame includes first indication information (a sleep indication), a cyclic redundancy check (cyclic redundancy check, CRC) #1 (optional), second indication information, and a CRC #2 (optional). The CRC #1 is used to check the first indication information, and the CRC #2 is used to check the second indication information. The frame structure of the first frame is not limited in this application. In this implementation, the backoff count value is associated with the first time interval, so that the second node obtains the first time interval based on the backoff count value, and then determines the sleep start time of the second node.

In a possible implementation, the first indication information includes a frame type of the first frame, and the frame type of the first frame at least indicates that the first frame is a control frame used to determine the sleep start time. FIG. 6B shows an example of a diagram of another frame structure of a first frame according to an embodiment of this application. As shown in FIG. 6B, the first frame includes a frame type, a CRC #1 (optional), a backoff count value, and a CRC #2 (optional). The CRC #1 is used to check the frame type, and the CRC #2 is used to check the backoff count value. The frame type in the first frame is an example of the first indication information. In this implementation, the frame type of the first frame at least indicates that the first frame is a control frame used to determine the sleep start time, so that the second node determines, based on the frame type of the first frame, that the first frame is a control frame used to determine the sleep start time.

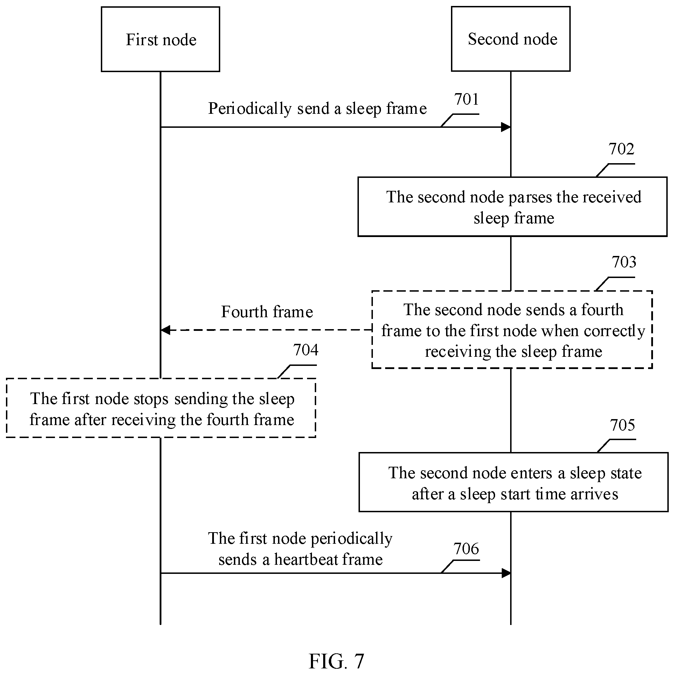

FIG. 7 is an interaction flowchart of another communication method according to an embodiment of this application. A method procedure in FIG. 7 is a possible implementation of the method described in FIG. 5. As shown in FIG. 7, the method includes the following steps.

701: A first node periodically sends a sleep frame.

Correspondingly, a second node receives the sleep frame periodically sent by the first node. The first node may send the sleep frame at a first periodicity. The sleep frame periodically sent by the first node may include the foregoing first frame and a third frame. The third frame is at least used by the second node to determine a sleep start time of the second node. For example, the third frame includes a frame type of the third frame and a backoff count value, the frame type of the third frame at least indicates that the third frame is a control frame used to determine the sleep start time, and the backoff count value in the third frame is at least used by the second node to determine the sleep start time. The backoff count value in the third frame may be 0. A sleep start time determined by the second node based on the backoff count value in the third frame is a moment at which the second node receives the third frame. A sleep start time determined by the second node based on the backoff count value (not 0) in the first frame is a first moment. A time interval between the first moment and the moment at which the second node receives the third frame is less than a time threshold. The time threshold may be 2 µs, 3 µs, 5 µs, 6 µs, 8 µs, 10 µs, 20 µs, 20.83 µs, or the like. This is not limited in this application. Because the time interval between the first moment and the moment at which the second node receives the third frame is less than the time threshold, it may be considered that the moment at which the second node receives the third frame is the same as the first moment. In other words, sleep start times obtained by the second node through calculation based on different control frames are the same. The second node may enter a sleep state after receiving the third frame, or may enter the sleep state upon arrival of the sleep start time.

An example of step 701 is as follows: The first node sends the sleep frame once at an interval of 20.83 µs (that is, the first periodicity is 20.83 µs), a backoff count value in a control frame sent by the first node for the first time is N, a backoff count value in a control frame sent for the second time is (N-1), a backoff count value in a control frame sent for the third time is (N-2), ..., a backoff count value in a control frame sent for the N^{th} time is 1, and a backoff count value in a control frame sent for the (N+1)^{th} time (namely, the third frame) is 0.

702: The second node parses the received sleep frame.

For example, the second node may parse each received sleep frame, and determine whether the sleep frame is correctly received.

703: The second node sends a fourth frame to the first node when correctly receiving the sleep frame.

Correspondingly, the first node receives the fourth frame from the second node. The fourth frame at least indicates that the second node correctly receives a control frame used to determine the sleep start time. An example of step 703 is as follows: The second node sends the fourth frame to the first node when correctly receiving a control frame sent by the first node for the first time.

In a possible implementation, when not correctly receiving a control frame used to determine the sleep start time, the second node does not feed back to the first node that the second node does not correctly receive the control frame. For example, when not correctly receiving the control frame sent by the first node for the first time, the second node does not feed back to the first node that the second node does not correctly receive the control frame. In this implementation, signaling overheads can be reduced.

In a possible implementation, when not correctly receiving a control frame used to determine the sleep start time, the second node feeds back to the first node that the second node does not correctly receive the control frame. For example, when not correctly receiving the control frame sent by the first node for the first time (namely, the first frame), the second node sends a seventh frame to the first node. The seventh frame at least indicates that the second node does not correctly receive the first frame. In this implementation, when not correctly receiving the control frame used to determine the sleep start time, the second node feeds back to the first node that the second node does not correctly receive the control frame, to continue to send a control frame used by the second node to determine the sleep start time.

704: The first node stops sending the sleep frame after receiving the fourth frame.

For example, before sending the third frame, the first node receives the fourth frame; and after receiving the fourth frame, the first node stops sending the sleep frame, that is, does not need to send the third frame. Step 703 and step 704 are optional.

705: The second node enters the sleep state upon arrival of the sleep start time.

That the second node enters the sleep state may be that the second node enters a low power consumption state. For example, before the second node enters the sleep state, a data forwarding function of the second node is enabled. For example, a communication frame (or data packet) is forwarded once every 20.83 µs. That the second node enters the sleep state may be that the second node disables the data forwarding function, that is, stops forwarding the communication frame (or data packet). This can reduce power consumption. Alternatively, that the second node enters the sleep state may be disabling some other functions that can reduce power consumption. This is not limited in this application.

In a possible implementation, the method procedure in FIG. 7 further includes: The first node enters a sleep state upon arrival of a target time point, where the target time point is a preset time point or the sleep start time. That the second node enters the sleep state may be that the second node enters a low power consumption state. For example, before the first node enters the sleep state, a data forwarding function of the first node is enabled. For example, one communication frame (or data packet) is sent every 20.83 µs. That the first node enters the sleep state may be that the first node disables the data forwarding function, that is, stops sending the communication frame. This can reduce power consumption. Alternatively, that the first node enters the sleep state may be disabling some other functions that can reduce power consumption. This is not limited in this application.

706: The first node periodically sends a heartbeat frame.

Correspondingly, the second node receives the heartbeat frame periodically sent by the first node. The second node maintains clock synchronization with the first node by using the received heartbeat frame. A possible implementation in which the second node maintains clock synchronization with the first node by using the received heartbeat frame is as follows: The heartbeat frame includes clock information of the first node, and the second node maintains clock synchronization with the first node by using the clock information in the received heartbeat frame; or a sending periodicity of the heartbeat frame corresponds to clock information, and the second node maintains clock synchronization with the first node by using a periodicity of receiving the heartbeat frame. One of heartbeat frames periodically sent by the second node is a second frame. The second frame is used by the second node to maintain clock synchronization with the first node. The second node may maintain clock synchronization with the first node based on the second frame.

In this embodiment of this application, the first node stops sending the sleep frame after receiving the fourth frame, so that signaling overheads can be reduced. In addition, the first node periodically sends the sleep frame, and the second node can determine the sleep start time when correctly receiving one sleep frame, so that reliability is high.

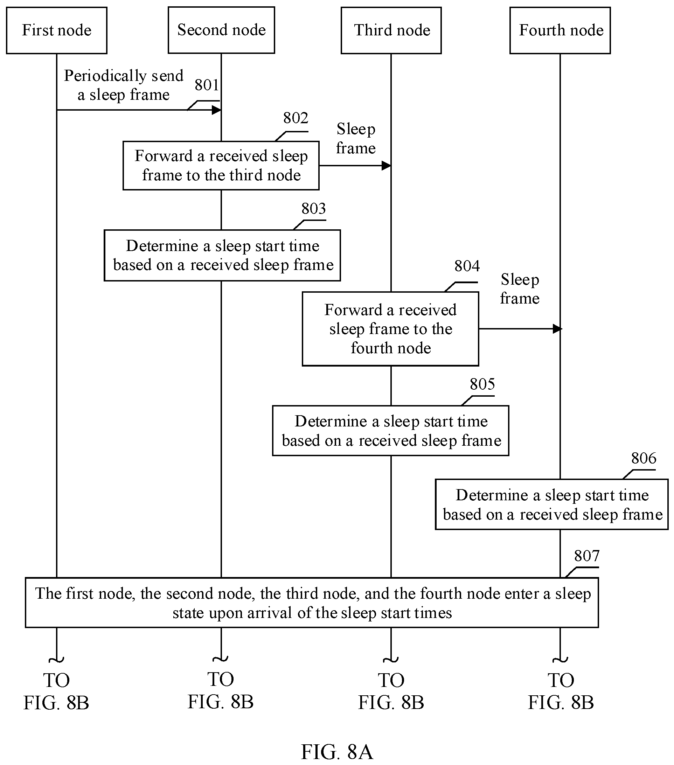

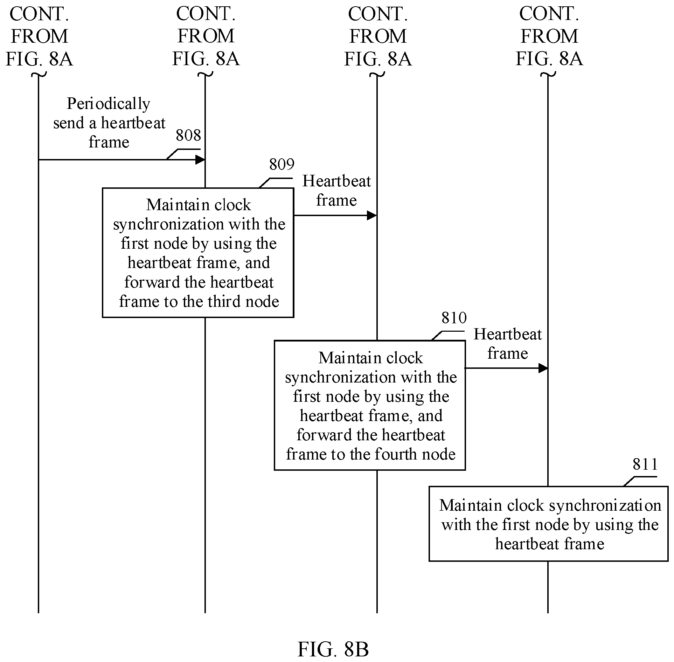

FIG. 8A and FIG. 8B are an interaction flowchart of another communication method according to an embodiment of this application. A method procedure in FIG. 8A and FIG. 8B is applicable to the communication system 100 shown in FIG. 1. An example of a communication system (including nodes in FIG. 8A and FIG. 8B) corresponding to the nodes in FIG. 8A and FIG. 8B is the vehicle-mounted multi-node wired audio transmission system shown in FIG. 2. The method procedure in FIG. 8A and FIG. 8B is a possible implementation of the method described in FIG. 5. As shown in FIG. 8A and FIG. 8B, the method includes the following steps.

801: A first node periodically sends a sleep frame.

Correspondingly, a second node receives the sleep frame periodically sent by the first node. The sleep frame periodically sent by the first node may include the foregoing first frame and the foregoing third frame. That the first node periodically sends the sleep frame may be replaced with the following: The first node periodically sends a control frame that is at least used by the second node and a downstream node of the second node to determine a sleep start time. Refer to FIG. 8A and FIG. 8B. The downstream node of the second node may include a third node and a fourth node, the second node is an upstream node of the third node (that is, the third node is a downstream node of the second node), and the third node is an upstream node of the fourth node. In FIG. 8A and FIG. 8B, the second node, the third node, and the fourth node are merely examples. A quantity of secondary nodes is not limited in embodiments of this application. Alternatively, that the first node periodically sends the sleep frame may be replaced with the following: The first node periodically sends a control frame that is at least used by a plurality of secondary nodes to determine a sleep start time, where the plurality of secondary nodes may include the second node, the third node, and the fourth node, and the first node is a primary node.

Refer to FIG. 8A and FIG. 8B. An example of step 801 is as follows: The first node sends the sleep frame once at an interval of 20.83 µs (that is, a first periodicity is 20.83 µs), a backoff count value in a control frame #1 sent by the first node for the first time is N, a backoff count value in a control frame #2 sent for the second time is (N-1), a backoff count value in a control frame #3 sent for the third time is (N-2), ..., a backoff count value in a control frame #N sent for the N^{th} time is 1, and a backoff count value in a control frame #(N+1) sent for the (N+1)^{th} time is 0.

802: The second node forwards a received sleep frame to the third node.

In a possible implementation, the second node periodically forwards a received sleep frame to the third node. For example, the second node forwards, to the third node once at an interval of 20.83 µs, a control frame most recently received by the second node. A sequence of step 802 and step 803 is not limited.

803: The second node determines a sleep start time based on a received sleep frame.

The second node may parse each control frame that is received by the second node and that is used by the second node to determine the sleep start time, and determine the sleep start time based on a correctly received control frame. For example, the second node parses each control frame that is received by the second node and that is used by the second node to determine the sleep start time, determines, after correctly receiving a control frame, the sleep start time based on a backoff count value in the control frame, and no longer determines the sleep start time by using a subsequently correctly received control frame. For example, a backoff count value in a control frame #k sent by the first node for the k^{th} time is (N-k+1), where N is an integer greater than 0, k is an integer greater than 0, and k is less than or equal to (N+1); the second node calculates a product of the first periodicity and the backoff count value (N-k+1), to obtain a time offset #k; and the second node shifts a moment at which the second node receives the control frame #k backward by the time offset #k, to obtain the sleep start time. A sequence of step 802 and step 803 is not limited.

804: The third node forwards a received sleep frame to the fourth node.

In a possible implementation, the third node periodically forwards a received sleep frame to the fourth node. For example, the third node forwards, to the fourth node once at an interval of 20.83 µs, a control frame most recently received by the third node.

805: The third node determines a sleep start time based on a received sleep frame.

An implementation of step 805 is similar to an implementation of step 803. Details are not described herein again. A sequence of step 804 and step 805 is not limited.

806: The fourth node determines a sleep start time based on a received sleep frame.

An implementation of step 806 is similar to an implementation of step 803. Details are not described herein again.

807: The first node, the second node, the third node, and the fourth node enter a sleep state upon arrival of the sleep start times.

It should be noted that the second node, the third node, and the fourth node determine respective sleep start times in a same manner. A time offset between sleep start times determined by any two of the second node, the third node, and the fourth node is less than the foregoing time threshold. Therefore, the sleep start time determined by the second node, the sleep start time determined by the third node, and the sleep start time determined by the fourth node may be considered as a same moment.

808: The first node periodically sends a heartbeat frame.

The heartbeat frame is used by a secondary node (including the second node, the third node, and the fourth node) to maintain clock synchronization with a primary node (namely, the first node).

809: The second node maintains clock synchronization with the first node by using the heartbeat frame, and forwards the heartbeat frame to the third node.

810: The third node maintains clock synchronization with the first node by using the heartbeat frame, and forwards the heartbeat frame to the fourth node.

811: The fourth node maintains clock synchronization with the first node by using the heartbeat frame.

The secondary node (including the second node, the third node, and the fourth node) maintains clock synchronization with the primary node (namely, the first node) by using the heartbeat frame, so that the secondary node enters a non-sleep state from the sleep state more quickly. Step 808 to step 811 are optional.

In this embodiment of this application, the first node periodically sends a sleep frame; and the second node, the third node, and the fourth node receive a sleep frame, and determine a sleep start time based on a backoff counter in a correctly received sleep frame. In this way, even if some control frames are not correctly received by the secondary node, theoretically, as long as one control frame is correctly received, control of synchronous sleep can be completed. In other words, the second node, the third node, and the fourth node synchronously enter the sleep state.

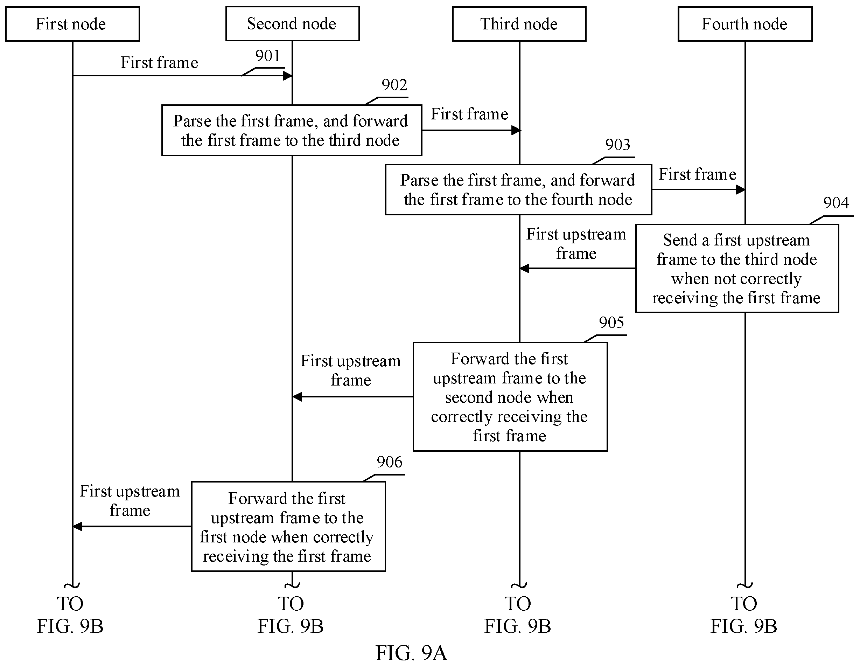

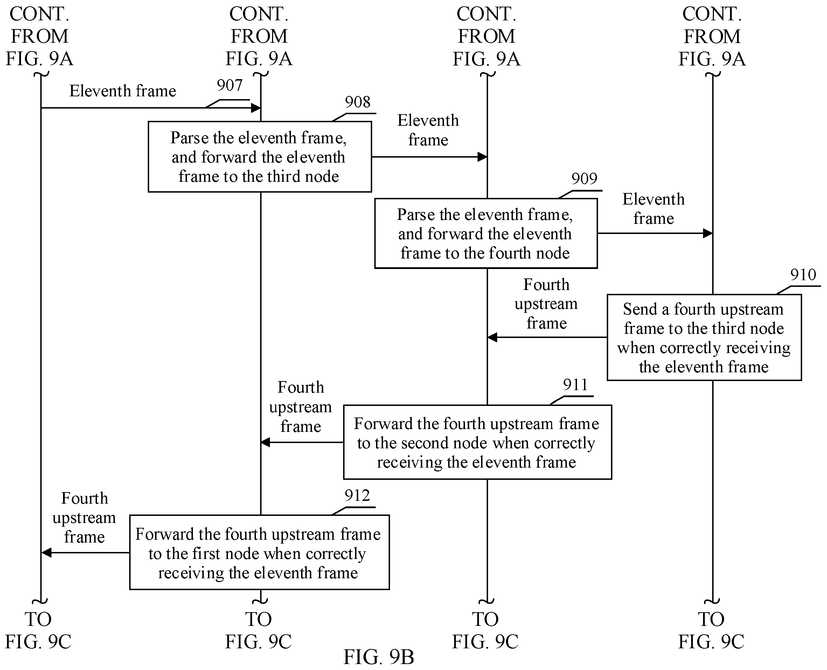

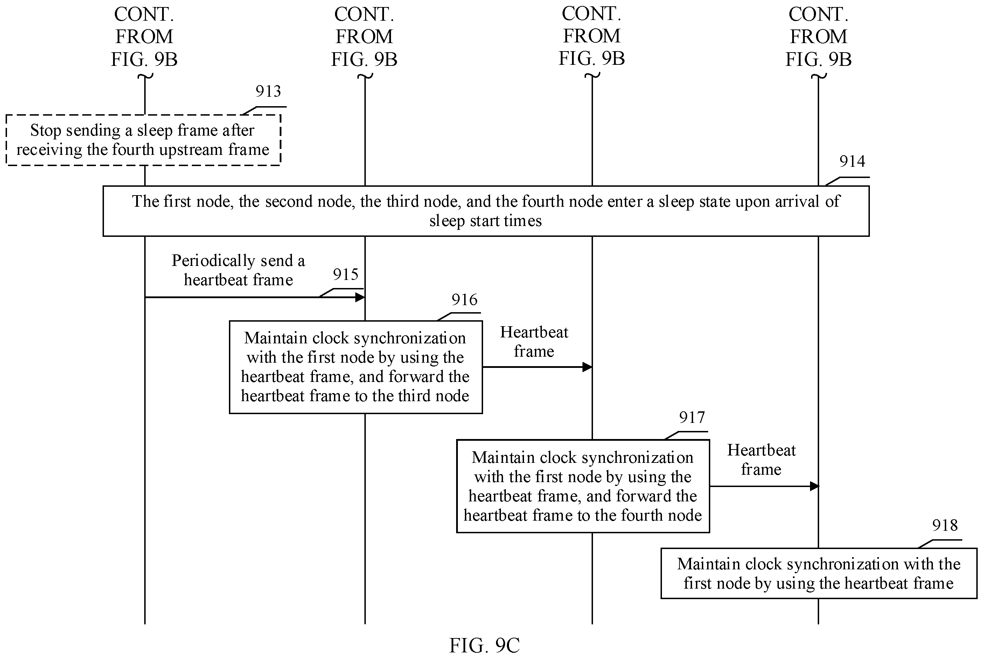

FIG. 9A to FIG. 9C are an interaction flowchart of another communication method according to an embodiment of this application. A method procedure in FIG. 9A to FIG. 9C is applicable to the communication system 100 shown in FIG. 1. An example of a communication system (including nodes in FIG. 8A and FIG. 8B) corresponding to the nodes in FIG. 9A to FIG. 9C is the vehicle-mounted multi-node wired audio transmission system shown in FIG. 2. The method procedure in FIG. 9A to FIG. 9C is a possible implementation of the method described in FIG. 5. As shown in FIG. 9A to FIG. 9C, the method includes the following steps.

901: A first node sends a first frame to a second node.

For step 901, refer to step 501. For example, a backoff count value in the first frame is N. The first frame is a sleep frame.

902: The second node parses the first frame, and forwards the first frame to a third node.

903: The third node parses the first frame, and forwards the first frame to a fourth node.

904: The fourth node sends a first upstream frame to the third node when not correctly receiving the first frame.

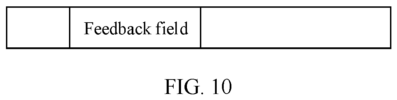

For example, the fourth node parses the received first frame, and sends the first upstream frame to the third node when not correctly receiving the first frame. The first upstream frame at least indicates that the fourth node does not correctly receive the first frame. The first upstream frame may include identification information of the fourth node. FIG. 10 is a diagram of a first upstream frame according to an embodiment of this application. As shown in FIG. 10, the first upstream frame includes a feedback field. For example, the feedback field in the first upstream frame is NACK, and the first upstream frame at least indicates that the fourth node does not correctly receive the first frame. For example, when not correctly receiving the first frame, the fourth node sets the feedback field in the first upstream frame, for example, sets the feedback field to NACK. For example, the feedback field in the first upstream frame occupies 1 bit, where 0 indicates ACK, and 1 indicates NACK.

905: The third node forwards the first upstream frame to the second node when correctly receiving the first frame.

Step 905 may be replaced with the following: When not correctly receiving the first frame, after receiving the first upstream frame, the third node sends a second upstream frame to the second node, where the second upstream frame at least indicates that the third node does not correctly receive the first frame. The second upstream frame may include identification information of the third node.

906: The second node forwards the first upstream frame to the first node when correctly receiving the first frame.

Step 906 may be replaced with the following: When not correctly receiving the first frame, after receiving the first upstream frame, the second node sends a third upstream frame to the first node, where the third upstream frame at least indicates that the second node does not correctly receive the first frame. The third upstream frame may include identification information of the second node.

Alternatively, step 906 may be replaced with the following: When not correctly receiving the first frame, after receiving the second upstream frame, the second node sends a third upstream frame to the first node, where the third upstream frame at least indicates that the second node does not correctly receive the first frame.

Alternatively, step 906 may be replaced with the following: When correctly receiving the first frame, after receiving the second upstream frame, the second node forwards the second upstream frame to the first node.

It can be learned from step 905 and step 906 that, in the method procedure in FIG. 9A to FIG. 9C, a node forwarding a sleep frame (including the second node and the third node) may perform the following operations: When correctly receiving a sleep frame, the node directly forwards a feedback of a downstream node of the node, for example, the first upstream frame, to an upstream node of the node; or when not correctly receiving a sleep frame, the node sets, to NACK, a feedback field in an upstream frame sent to an upstream node of the node.

907: The first node sends an eleventh frame to the second node.

The eleventh frame is a sleep frame. A backoff count value in the eleventh frame may be (N-1). The first node may periodically send a sleep frame. Refer to step 701 in FIG. 7. For example, the first node periodically sends the sleep frame until receiving an upstream frame that at least indicates that the second node and each downstream node of the second node correctly receive a sleep frame. In other words, the first node periodically sends the sleep frame, and stops sending the sleep frame after receiving an upstream frame (for example, a fourth frame) that at least indicates that the second node and each downstream node of the second node correctly receive a sleep frame. For example, after receiving the first upstream frame, the second upstream frame, or the third upstream frame sent by the second node, the first node continues to periodically send the sleep frame.

908: The second node parses the eleventh frame, and forwards the eleventh frame to the third node.

909: The third node parses the eleventh frame, and forwards the eleventh frame to the fourth node.

910: The fourth node sends a fourth upstream frame to the third node when correctly receiving the eleventh frame.

For example, the fourth node parses the received eleventh frame, and sends the fourth upstream frame to the third node when correctly receiving the eleventh frame. The fourth upstream frame at least indicates that the fourth node correctly receives the eleventh frame. The fourth upstream frame may include identification information of the fourth node. For example, the fourth upstream frame includes a feedback field, the feedback field in the fourth upstream frame is ACK, and the fourth upstream frame at least indicates that the fourth node correctly receives the eleventh frame. For example, when correctly receiving the eleventh frame, the fourth node sets the feedback field in the fourth upstream frame, for example, sets the feedback field to ACK. With reference to step 904 and step 910, it can be learned that, when correctly receiving a sleep frame, the fourth node sends, to an upstream node of the fourth node (namely, the third node), an upstream frame that at least indicates that the fourth node correctly receives the sleep frame, for example, the fourth upstream frame; or when not correctly receiving a sleep frame, the fourth node sends, to an upstream node of the fourth node (namely, the third node), an upstream frame that at least indicates that the fourth node does not correctly receive the sleep frame, for example, the first upstream frame.

The fourth node may determine a sleep start time based on the eleventh frame when correctly receiving the eleventh frame.

911: The third node forwards the fourth upstream frame to the second node when correctly receiving the eleventh frame.

The third node may determine a sleep start time based on the eleventh frame when correctly receiving the eleventh frame.

912: The second node forwards the fourth upstream frame to the first node when correctly receiving the eleventh frame.

The second node may determine a sleep start time based on the eleventh frame when correctly receiving the eleventh frame.

913: The first node stops sending a sleep frame after receiving the fourth upstream frame.

Step 913 is optional. When the first node receives the fourth upstream frame, it indicates that each secondary node (including the second node, the third node, and the fourth node) correctly receives a sleep frame, each secondary node may determine a sleep start time, and the first node may no longer send a sleep frame. The first node stops sending the sleep frame after receiving the fourth upstream frame, so that signaling overheads can be reduced.

Step 913 may be replaced with the following: The first node sends a twelfth frame after receiving the fourth upstream frame. The twelfth frame is a sleep frame. A backoff count value in the twelfth frame may be (N-2).

914: The first node, the second node, the third node, and the fourth node enter a sleep state upon arrival of the sleep start times.

The first frame is one of sleep frames periodically sent by the first node, and the eleventh frame is another of the sleep frames periodically sent by the first node. It should be noted that step 901 to step 914 are merely an example, and an objective of the example is to describe operations performed by the first node, the second node, the third node, and the fourth node for a sleep frame. It should be understood that, for each sleep frame sent by the first node, the first node, the second node, the third node, and the fourth node may all perform processing in a same manner.

915: The first node periodically sends a heartbeat frame.

916: The second node maintains clock synchronization with the first node by using the heartbeat frame, and forwards the heartbeat frame to the third node.

917: The third node maintains clock synchronization with the first node by using the heartbeat frame, and forwards the heartbeat frame to the fourth node.

918: The fourth node maintains clock synchronization with the first node by using the heartbeat frame.

For step 914 to step 918, refer to step 807 to step 811. Details are not described herein again.

In this embodiment of this application, the first node periodically sends a sleep frame; and the second node, the third node, and the fourth node receive a sleep frame, and determine a sleep start time based on a backoff counter in a correctly received sleep frame. In this way, even if some control frames are not correctly received by the secondary node, theoretically, as long as one control frame is correctly received, control of synchronous sleep can be completed. In other words, the second node, the third node, and the fourth node synchronously enter the sleep state. The second node, the third node, and the fourth node perform feedback for a received sleep frame in an upstream direction, and the first node may learn of, by using a feedback field in an upstream frame fed back by each secondary node, a status of receiving the sleep frame by the secondary node. After receiving an upstream frame that at least indicates that all secondary nodes correctly receive a sleep frame, the first node may stop sending a sleep frame in advance, and enter the sleep state upon arrival of a specified time point.

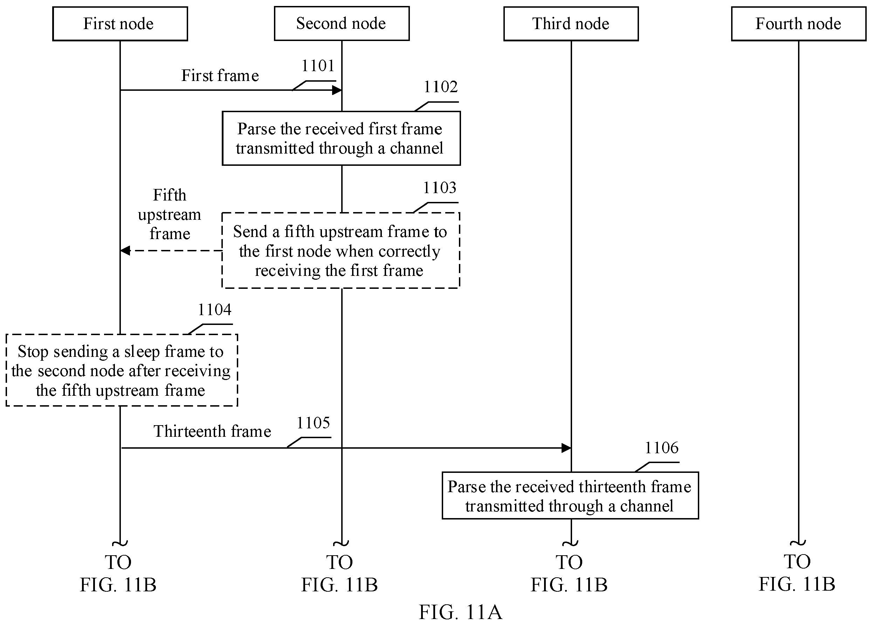

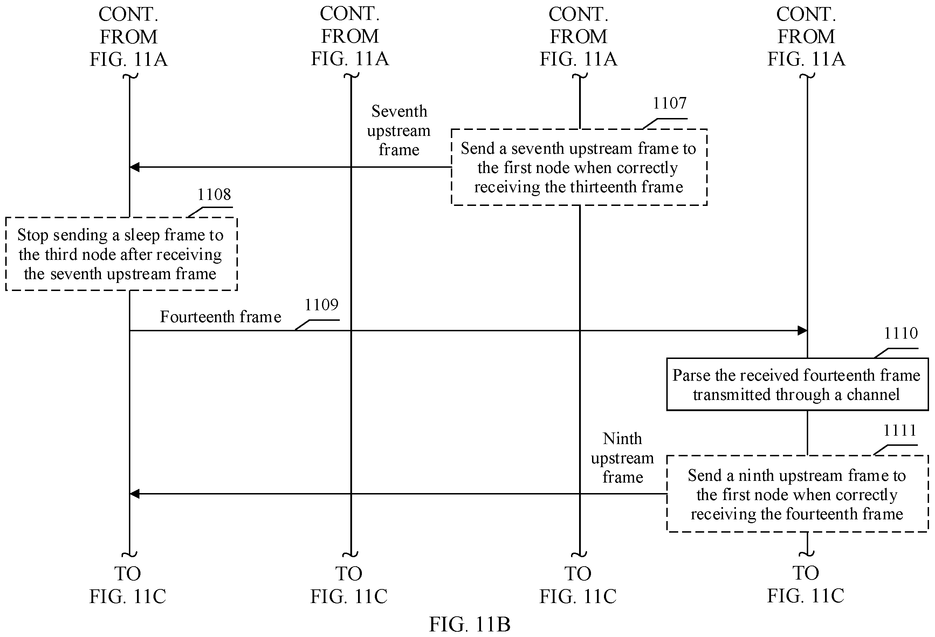

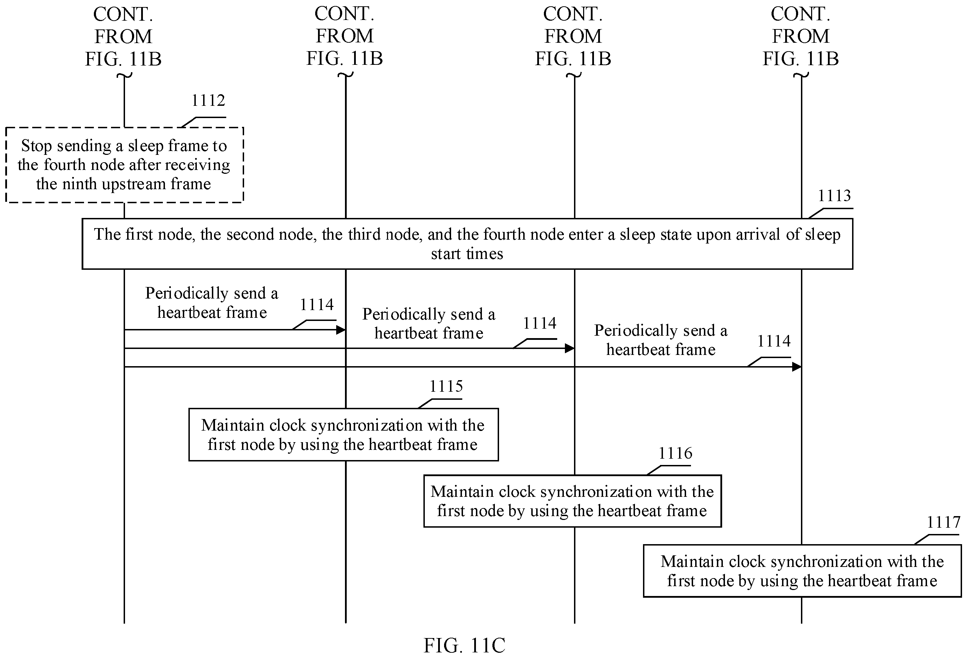

FIG. 11A to FIG. 11C are an interaction flowchart of another communication method according to an embodiment of this application. A method procedure in FIG. 11A to FIG. 11C is applicable to the communication system 300 shown in FIG. 3. An example of a communication system (including nodes in FIG. 11A to FIG. 11C) corresponding to the nodes in FIG. 11A to FIG. 11C is the vehicle-mounted multi-node wired audio transmission system shown in FIG. 4. The method procedure in FIG. 11A to FIG. 11C is a possible implementation of the method described in FIG. 5. As shown in FIG. 11A to FIG. 11C, the method includes the following steps.

1101: A first node sends a first frame to a second node.

Correspondingly, the second node receives the first frame from the first node. In the method procedure in FIG. 11A to FIG. 11C, the following example is used: The first node is a primary node, and the second node, a third node, and a fourth node are secondary nodes. A quantity of secondary nodes is not limited in embodiments of this application.

In a possible implementation, the first node periodically sends a sleep frame to the second node-the third node-the fourth node. For example, the first node sends one sleep frame at an interval of 20.83 µs (namely, a first periodicity). In other words, a time interval at which the first node sends the sleep frame is 20.83 µs. The first frame and a thirteenth frame, a fourteenth frame, and a fifteenth frame below are all sleep frames. The sleep frame periodically sent by the first node may include a backoff count value, and a difference between backoff count values in two sleep frames that are sent by the first node and that are adjacent in time is 1. For example, the first node sends the first frame to the second node, where a backoff count value in the first frame is N; the first node sends a thirteenth frame to the third node 20.83 µs after sending the first frame, where a backoff count value in the thirteenth frame is (N-1); the first node sends a fourteenth frame to the fourth node 20.83 µs after sending the thirteenth frame, where a backoff count value in the fourteenth frame is (N-2); and the first node sends a fifteenth frame to the second node 20.83 µs after sending the fourteenth frame, where a backoff count value in the fifteenth frame is (N-3), and N is an integer greater than 3. In this example, a periodicity at which the first node sends the sleep frame is 20.83 µs. It should be noted that a periodicity at which the first node sends the sleep frame is not limited in this application.

A sleep frame sent by the first node to a node is used by the node to determine a sleep start time. A backoff count value in the sleep frame is used to determine the sleep start time. For example, an example in which the second node, the third node, and the fourth node determine a sleep start time based on a received sleep frame is as follows: The backoff count value in the first frame is N, the second node calculates a product of the first periodicity and the backoff count value N, to obtain a time offset #1, and the second node shifts a moment at which the second node receives the first frame backward by the time offset #1, to obtain a sleep start time. The backoff count value in the thirteenth frame is (N-1), the third node calculates a product of the first periodicity and the backoff count value (N-1), to obtain a time offset #2, and the third node shifts a moment at which the third node receives the thirteenth frame backward by the time offset #2, to obtain a sleep start time. The backoff count value in the fourteenth frame is (N-2), the fourth node calculates a product of the first periodicity and the backoff count value (N-2), to obtain a time offset #3, and the fourth node shifts a moment at which the fourth node receives the fourteenth frame backward by the time offset #3, to obtain a sleep start time. In this example, a time offset between sleep start times determined by any two of the second node, the third node, and the fourth node is less than the foregoing time threshold. Therefore, the sleep start time determined by the second node, the sleep start time determined by the third node, and the sleep start time determined by the fourth node may be considered as a same moment.

1102: The second node parses the received first frame transmitted through a channel.

For step 1102, refer to step 502. The second node may determine a sleep start time based on the first frame when correctly receiving the first frame.

1103: The second node sends a fifth upstream frame to the first node when correctly receiving the first frame.

The fifth upstream frame at least indicates that the second node correctly receives the first frame. The fifth upstream frame may include identification information of the second node.

1104: The first node stops sending a sleep frame to the second node after receiving the fifth upstream frame.

Step 1103 and step 1104 are optional. In other words, the method procedure in FIG. 11A to FIG. 11C does not include step 1103 and step 1104. Step 1103 and step 1104 may be replaced with the following: The second node sends a sixth upstream frame to the first node when not correctly receiving the first frame. The sixth upstream frame at least indicates that the second node does not correctly receive the first frame. The sixth upstream frame may include identification information of the second node.

1105: The first node sends a thirteenth frame to the third node.

Correspondingly, the third node receives the thirteenth frame from the first node.

1106: The third node parses the received thirteenth frame transmitted through a channel.

The second node may determine a sleep start time based on the thirteenth frame when correctly receiving the thirteenth frame.

1107: The third node sends a seventh upstream frame to the first node when correctly receiving the thirteenth frame.

The seventh upstream frame at least indicates that the third node correctly receives the thirteenth frame. The seventh upstream frame may include identification information of the third node.

1108: The first node stops sending a sleep frame to the third node after receiving the seventh upstream frame.

Step 1107 and step 1108 are optional. Step 1107 and step 1108 may be replaced with the following: The third node sends an eighth upstream frame to the first node when not correctly receiving the thirteenth frame. The eighth upstream frame at least indicates that the third node does not correctly receive the thirteenth frame. The eighth upstream frame may include identification information of the third node.

1109: The first node sends a fourteenth frame to the fourth node.

Correspondingly, the fourth node receives the fourteenth frame from the first node.

1110: The fourth node parses the received fourteenth frame transmitted through a channel.

The fourth node may determine a sleep start time based on the fourteenth frame when correctly receiving the fourteenth frame.

1111: The fourth node sends a ninth upstream frame to the first node when correctly receiving the fourteenth frame.

The ninth upstream frame at least indicates that the fourth node correctly receives the fourteenth frame. The ninth upstream frame may include identification information of the fourth node.

1112: The first node stops sending a sleep frame to the fourth node after receiving the ninth upstream frame.

Step 1111 and step 1112 are optional. Step 1111 and step 1112 may be replaced with the following: The fourth node sends a tenth upstream frame to the first node when not correctly receiving the fourteenth frame. The tenth upstream frame at least indicates that the fourth node does not correctly receive the fourteenth frame. The tenth upstream frame may include identification information of the fourth node.

1113: The first node, the second node, the third node, and the fourth node enter a sleep state upon arrival of the sleep start times.

It should be noted that step 1101 to step 1112 are merely examples of operations performed before the first node, the second node, the third node, and the fourth node enter the sleep state. Step 1101 to step 1113 may be replaced with the following: The first node periodically sends a sleep frame in a sequence of the second node-the third node-the fourth node-the second node; and the second node, the third node, and the fourth node parse a received sleep frame, and determine a sleep start time based on a correctly received sleep frame.

1114: The first node periodically sends a heartbeat frame to the second node, the third node, and the fourth node.

1115: The second node maintains clock synchronization with the first node by using the heartbeat frame.

1116: The third node maintains clock synchronization with the first node by using the heartbeat frame.

1117: The fourth node maintains clock synchronization with the first node by using the heartbeat frame.

In this embodiment of this application, the first node periodically sends a sleep frame; and the second node, the third node, and the fourth node receive a sleep frame, and determine a sleep start time based on a backoff counter in a correctly received sleep frame. In this way, even if some control frames are not correctly received by the secondary node, theoretically, as long as one control frame is correctly received, control of synchronous sleep can be completed. In other words, the second node, the third node, and the fourth node synchronously enter the sleep state.

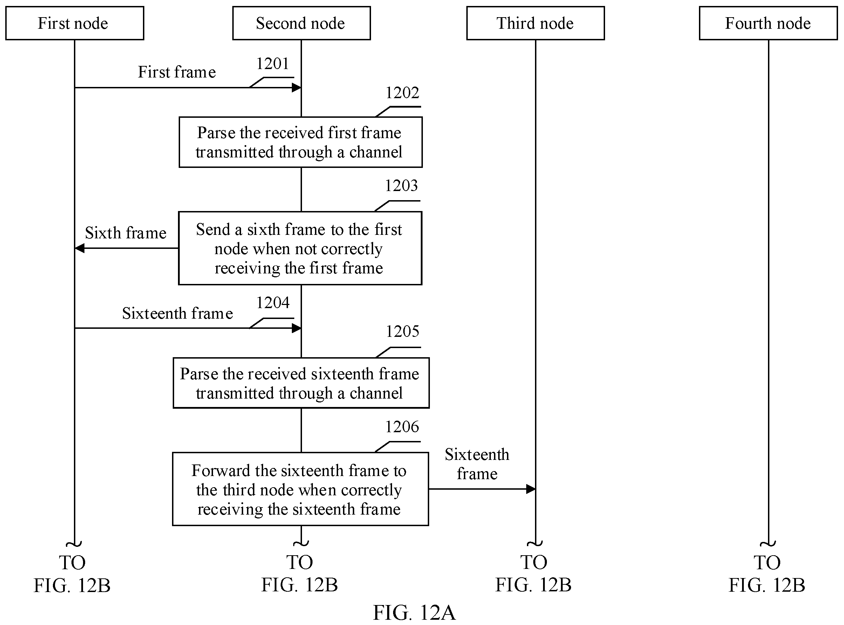

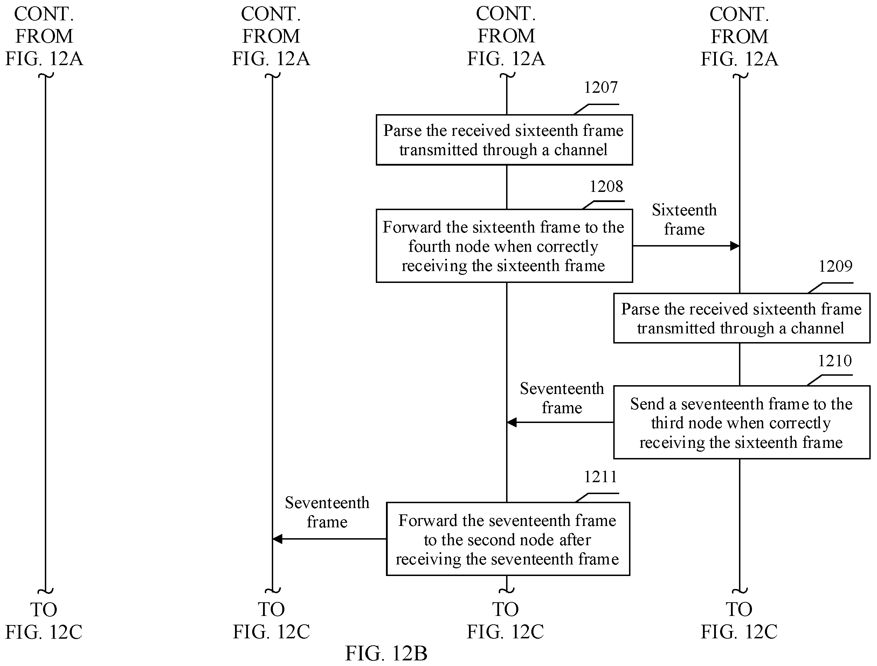

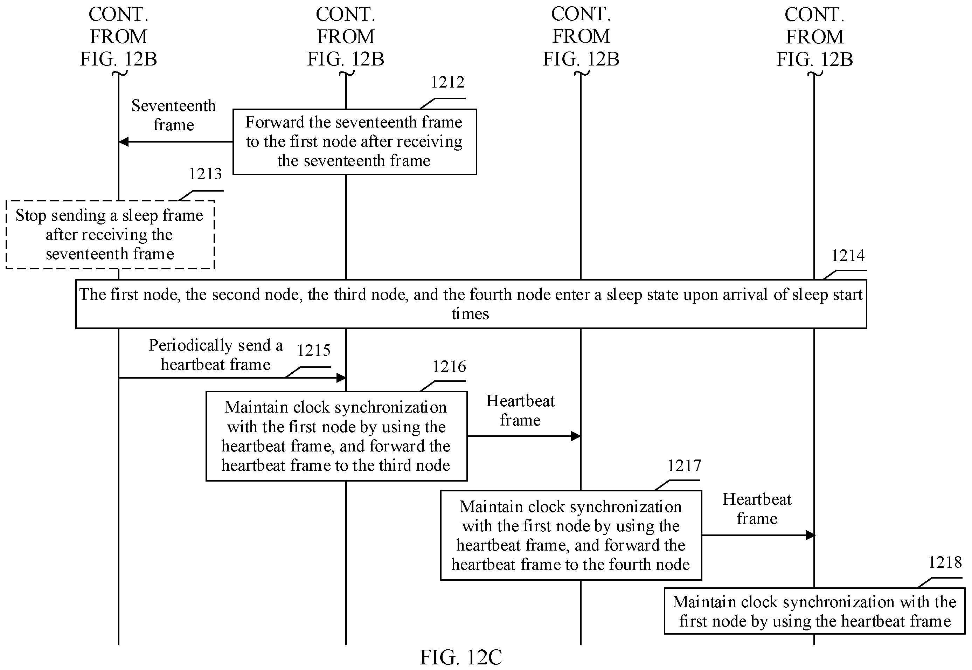

FIG. 12A to FIG. 12C are an interaction flowchart of another communication method according to an embodiment of this application. A method procedure in FIG. 12A to FIG. 12C is applicable to the communication system 100 shown in FIG. 1. An example of a communication system (including nodes in FIG. 12A to FIG. 12C) corresponding to the nodes in FIG. 12A to FIG. 12C is the vehicle-mounted multi-node wired audio transmission system shown in FIG. 2. The method procedure in FIG. 12A to FIG. 12C is a possible implementation of the method described in FIG. 5. As shown in FIG. 12A to FIG. 12C, the method includes the following steps.

1201: A first node sends a first frame to a second node.

Correspondingly, the second node receives the first frame from the first node. For step 1501 and step 1502, refer to step 501 and step 502. For example, the first node periodically sends a sleep frame to the second node, the first frame is a sleep frame, and a backoff count value in the first frame is N.

1202: The second node parses the received first frame transmitted through a channel.

1203: The second node sends a sixth frame to the first node when not correctly receiving the first frame.

The sixth frame at least indicates that the second node does not correctly receive the first frame. Step 1203 may be replaced with the following: The second node forwards the first frame to a third node when correctly receiving the first frame. Operations performed by the second node for a received sleep frame may be as follows: When correctly receiving the sleep frame, the second node forwards the sleep frame to the third node; or when not correctly receiving the sleep frame, the second node sends an upstream frame (for example, the sixth frame) to the first node, where the upstream frame at least indicates that the second node does not correctly receive the sleep frame.

1204: The first node sends a sixteenth frame to the second node.

Correspondingly, the second node receives the sixteenth frame from the first node. For example, the first node periodically sends a sleep frame to the second node, the sixteenth frame is a sleep frame, and a backoff count value in the sixteenth frame is (N-1).

1205: The second node parses the received sixteenth frame transmitted through a channel.

The second node may determine a sleep start time based on the sixteenth frame when correctly receiving the sixteenth frame.

1206: The second node forwards the sixteenth frame to the third node when correctly receiving the sixteenth frame.

1207: The third node parses the received sixteenth frame transmitted through a channel.

The third node may determine a sleep start time based on the sixteenth frame when correctly receiving the sixteenth frame.

1208: The third node forwards the sixteenth frame to a fourth node when correctly receiving the sixteenth frame.

Step 1208 may be replaced with the following: The third node sends an upstream frame to the second node when not correctly receiving the sixteenth frame, where the upstream frame at least indicates that the third node does not correctly receive the sixteenth frame. Operations performed by the third node for a received sleep frame may be as follows: When correctly receiving the sleep frame, the third node forwards the sleep frame to the fourth node; or when not correctly receiving the sleep frame, the third node sends an upstream frame (for example, a sixth frame) to the second node, where the upstream frame at least indicates that the third node does not correctly receive the sleep frame.

1209: The fourth node parses the received sixteenth frame transmitted through a channel.

The fourth node may determine a sleep start time based on the sixteenth frame when correctly receiving the sixteenth frame.

1210: The fourth node sends a seventeenth frame to the third node when correctly receiving the sixteenth frame.

The seventeenth frame at least indicates that the fourth node correctly receives the sixteenth frame. Step 1210 may be replaced with the following: The fourth node sends an upstream frame to the third node when not correctly receiving the sixteenth frame, where the upstream frame at least indicates that the fourth node does not correctly receive the sixteenth frame.

1211: The third node forwards the seventeenth frame to the second node after receiving the seventeenth frame.

1212: The second node forwards the seventeenth frame to the first node after receiving the seventeenth frame.

1213: The first node stops sending a sleep frame after receiving the seventeenth frame.

Step 1213 is optional.

1214: The first node, the second node, the third node, and the fourth node enter a sleep state upon arrival of the sleep start times.

It should be noted that step 1201 to step 1114 are merely examples of operations performed before the first node, the second node, the third node, and the fourth node enter the sleep state.

1215: The first node periodically sends a heartbeat frame.

The heartbeat frame is used by a secondary node (including the second node, the third node, and the fourth node) to maintain clock synchronization with a primary node (namely, the first node).

1216: The second node maintains clock synchronization with the first node by using the heartbeat frame, and forwards the heartbeat frame to the third node.

1217: The third node maintains clock synchronization with the first node by using the heartbeat frame, and forwards the heartbeat frame to the fourth node.

1218: The fourth node maintains clock synchronization with the first node by using the heartbeat frame.

The secondary node (including the second node, the third node, and the fourth node) maintains clock synchronization with the primary node (namely, the first node) by using the heartbeat frame, so that the secondary node enters a non-sleep state from the sleep state more quickly. Step 1215 to step 1218 are optional.

In this embodiment of this application, the second node and the third node forward a sleep frame when correctly receiving the sleep frame, and do not forward a sleep frame when not correctly receiving the sleep frame. This can avoid forwarding a sleep frame that is not correctly received, to reduce signaling overheads.

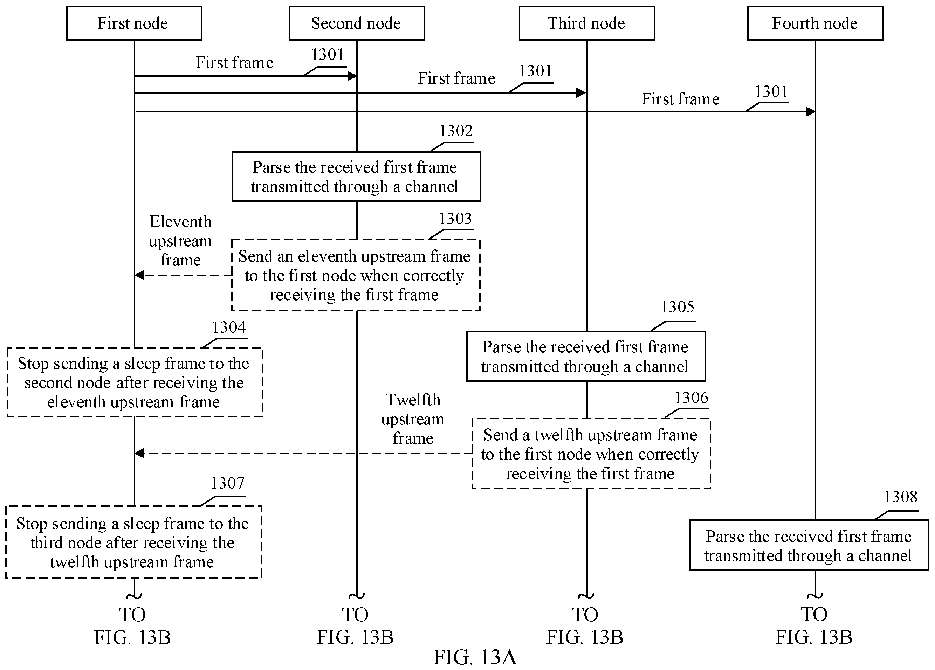

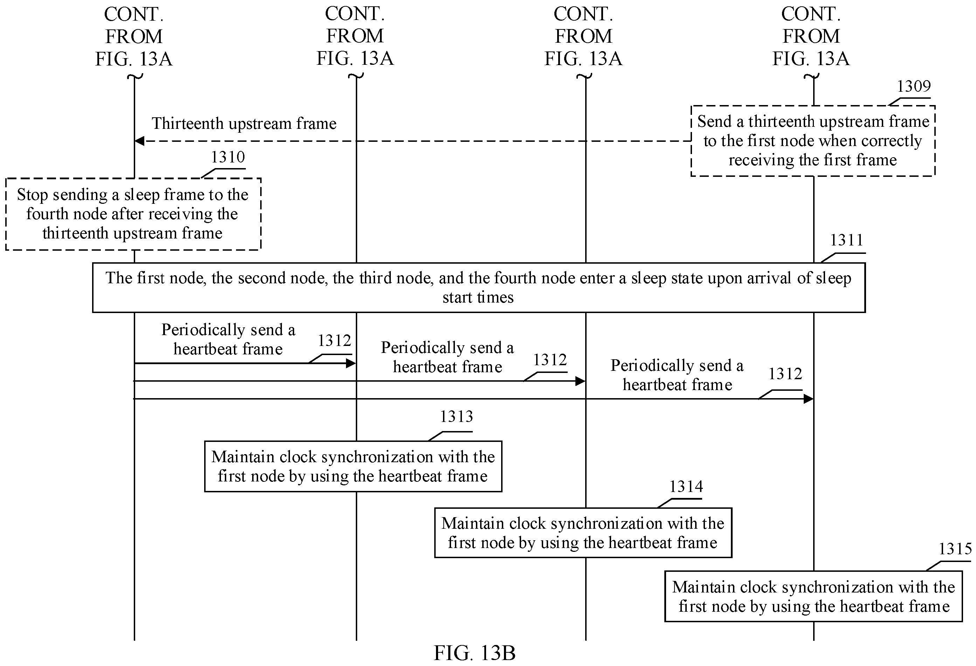

FIG. 13A and FIG. 13B are an interaction flowchart of another communication method according to an embodiment of this application. A method procedure in FIG. 13A and FIG. 13B is applicable to the communication system 300 shown in FIG. 3. An example of a communication system (including nodes in FIG. 11A to FIG. 11C) corresponding to the nodes in FIG. 13A and FIG. 13B is the vehicle-mounted multi-node wired audio transmission system shown in FIG. 4. The method procedure in FIG. 13A and FIG. 13B is a possible implementation of the method described in FIG. 5. As shown in FIG. 13A and FIG. 13B, the method includes the following steps.

1301: A first node simultaneously sends a first frame to a second node, a third node, and a fourth node.

An example of step 1301 is as follows: A time offset between a moment #1 at which the first node sends the first frame to the second node and a moment #2 at which the first node sends the first frame to the third node is less than the foregoing time threshold, a time offset between the moment #1 at which the first node sends the first frame to the second node and a moment #3 at which the first node sends the first frame to the fourth node is less than the foregoing time threshold, and a time offset between the moment #2 at which the first node sends the first frame to the third node and the moment #3 at which the first node sends the first frame to the fourth node is less than the foregoing time threshold. For example, the foregoing time threshold is 2 µs. The first frame is a sleep frame.

Step 1301 may be a sleep frame sending operation in periodically and simultaneously sending a sleep frame by the first node to the second node, the third node, and the fourth node. For example, the first node simultaneously sends a same sleep frame to the second node, the third node, and the fourth node at an interval of 20.83 µs. A backoff count value in a sleep frame sent by the first node for the first time is N, a backoff count value in a sleep frame sent by the second node for the second time is (N-1), and so on. A backoff count value in a last sleep frame sent by the first node is 0.

1302: The second node parses the received first frame transmitted through a channel.

1303: The second node sends an eleventh upstream frame to the first node when correctly receiving the first frame.

The eleventh upstream frame at least indicates that the second node correctly receives the first frame. The eleventh upstream frame may include identification information of the second node. The second node may determine a sleep start time based on a correctly received sleep frame (for example, the first frame).

1304: The first node stops sending a sleep frame to the second node after receiving the eleventh upstream frame.

Step 1303 and step 1304 are optional. In other words, the method procedure in FIG. 13A and FIG. 13B does not include step 1303 and step 1304. Step 1303 and step 1304 may be replaced with the following: When not correctly receiving the first frame, the second node sends, to the first node, an upstream frame that at least indicates that the second node does not correctly receive the first frame, where the upstream frame may include identification information of the second node.

1305: The third node parses the received first frame transmitted through a channel.

1306: The third node sends a twelfth upstream frame to the first node when correctly receiving the first frame.

The twelfth upstream frame at least indicates that the third node correctly receives the first frame. The twelfth upstream frame may include identification information of the third node. The third node may determine a sleep start time based on a correctly received sleep frame (for example, the first frame).

1307: The first node stops sending a sleep frame to the third node after receiving the twelfth upstream frame.

Step 1306 and step 1307 are optional. In other words, the method procedure in FIG. 13A and FIG. 13B does not include step 1306 and step 1307. Step 1306 and step 1307 may be replaced with the following: When not correctly receiving the first frame, the third node sends, to the first node, an upstream frame that at least indicates that the third node does not correctly receive the first frame, where the upstream frame may include identification information of the third node.

1308: The fourth node parses the received first frame transmitted through a channel.

A sequence of step 1302, step 1305, and step 1308 is not limited.

1309: The fourth node sends a thirteenth upstream frame to the first node when correctly receiving the first frame.

The thirteenth upstream frame at least indicates that the fourth node correctly receives the first frame. The thirteenth upstream frame may include identification information of the fourth node. The fourth node may determine a sleep start time based on a correctly received sleep frame (for example, the first frame).

1310: The first node stops sending a sleep frame to the fourth node after receiving the thirteenth upstream frame.

Step 1309 and step 1310 are optional. In other words, the method procedure in FIG. 13A and FIG. 13B does not include step 1309 and step 1310. Step 1309 and step 1310 may be replaced with the following: When not correctly receiving the first frame, the fourth node sends, to the first node, an upstream frame that at least indicates that the fourth node does not correctly receive the first frame, where the upstream frame may include identification information of the fourth node.

It should be noted that step 1301 to step 1310 are merely examples of operations performed before the first node, the second node, the third node, and the fourth node enter a sleep state. For example, step 1301 to step 1310 may be replaced with the following: The first node periodically and simultaneously sends a sleep frame to the second node, the third node, and the fourth node; and the second node, the third node, and the fourth node parse the received sleep frame, and determine a sleep start time based on a correctly received sleep frame.

1311: The first node, the second node, the third node, and the fourth node enter the sleep state upon arrival of the sleep start times.

1312: The first node periodically sends a heartbeat frame to the second node, the third node, and the fourth node.

1313: The second node maintains clock synchronization with the first node by using the heartbeat frame.

1314: The third node maintains clock synchronization with the first node by using the heartbeat frame.

1315: The fourth node maintains clock synchronization with the first node by using the heartbeat frame.

In this embodiment of this application, the first node periodically and simultaneously sends a sleep frame to the second node, the third node, and the fourth node; and the second node, the third node, and the fourth node receive the sleep frame, and determine a sleep start time based on a backoff counter in a correctly received sleep frame. In this way, even if some control frames are not correctly received by the secondary node, theoretically, as long as one control frame is correctly received, control of synchronous sleep can be completed. In other words, the second node, the third node, and the fourth node synchronously enter the sleep state.

The following describes, with reference to the accompanying drawings, structures of communication apparatuses that can implement the communication methods provided in embodiments of this application. The following only briefly describes the communication apparatuses. For implementation details of the solutions, refer to descriptions in the foregoing method embodiments. Details are not described below again.

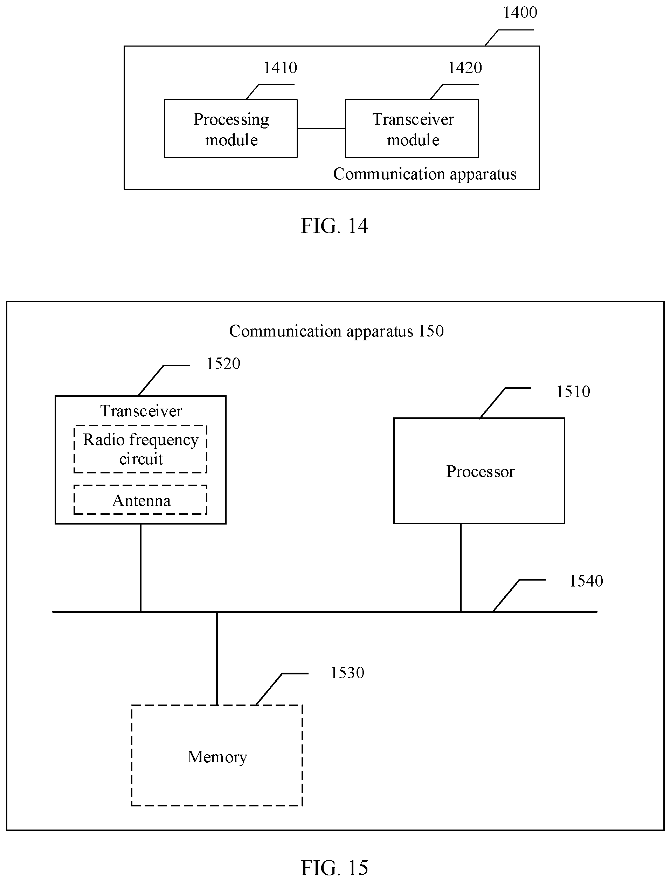

FIG. 14 is a diagram of a structure of a communication apparatus 1400 according to an embodiment of this application. The communication apparatus 1400 may correspondingly implement functions or steps implemented by the first node, the second node, the third node, or the fourth node in the foregoing method embodiments. The communication apparatus may include a processing module 1410 and a transceiver module 1420. In a possible implementation, the apparatus may further include a storage unit. The storage unit may be configured to store instructions (code or a program) and/or data. The processing module 1410 and the transceiver module 1420 may be coupled to the storage unit. For example, the processing module 1410 may read the instructions (the code or the program) and/or the data in the storage unit, to implement a corresponding method. The foregoing units may be independently disposed, or may be partially or completely integrated. For example, the transceiver module 1420 may include a sending module and a receiving module. The sending module may be a transmitter, and the receiving module may be a receiver. An entity corresponding to the transceiver module 1420 may be a transceiver, or may be a communication interface.

In some possible implementations, the communication apparatus 1400 can correspondingly implement behavior and functions of the first node in the foregoing method embodiments. For example, the communication apparatus 1400 may be the first node, or may be a component (for example, a chip or a circuit) used in the first node. For example, the transceiver module 1420 may be configured to perform all receiving or sending operations performed by the first node in the embodiments in FIG. 5, FIG. 7, FIG. 8A and FIG. 8B, FIG. 9A to FIG. 9C, FIG. 11A to FIG. 11C, and FIG. 12A to FIG. 12C. For example, the processing module 1410 may be configured to perform all operations performed by the first node in the embodiments in FIG. 5, FIG. 7, FIG. 8A and FIG. 8B, FIG. 9A to FIG. 9C, FIG. 11A to FIG. 11C, and FIG. 12A to FIG. 12C other than receiving and sending operations.

In some possible implementations, the communication apparatus 1400 can correspondingly implement behavior and functions of the second node in the foregoing method embodiments. For example, the communication apparatus 1400 may be the second node, or may be a component (for example, a chip or a circuit) used in the second node. For example, the transceiver module 1420 may be configured to perform all receiving or sending operations performed by the second node in the embodiments in FIG. 5, FIG. 7, FIG. 8A and FIG. 8B, FIG. 9A to FIG. 9C, FIG. 11A to FIG. 11C, and FIG. 12A to FIG. 12C. For example, the processing module 1410 may be configured to perform all operations performed by the second node in the embodiments in FIG. 5, FIG. 7, FIG. 8A and FIG. 8B, FIG. 9A to FIG. 9C, FIG. 11A to FIG. 11C, and FIG. 12A to FIG. 12C other than receiving and sending operations.

In some possible implementations, the communication apparatus 1400 can correspondingly implement behavior and functions of the third node in the foregoing method embodiments. For example, the communication apparatus 1400 may be the third node, or may be a component (for example, a chip or a circuit) used in the third node. For example, the transceiver module 1420 may be configured to perform all receiving or sending operations performed by the third node in the embodiments in FIG. 8A and FIG. 8B, FIG. 9A to FIG. 9C, FIG. 11A to FIG. 11C, and FIG. 12A to FIG. 12C. For example, the processing module 1410 may be configured to perform all operations performed by the third node in the embodiments in FIG. 8A and FIG. 8B, FIG. 9A to FIG. 9C, FIG. 11A to FIG. 11C, and FIG. 12A to FIG. 12C other than receiving and sending operations.

In some possible implementations, the communication apparatus 1400 can correspondingly implement behavior and functions of the second node in the foregoing method embodiments. For example, the communication apparatus 1400 may be the second node, or may be a component (for example, a chip or a circuit) used in the second node. For example, the transceiver module 1420 may be configured to perform all receiving or sending operations performed by the second node in the embodiments in FIG. 8A and FIG. 8B, FIG. 9A to FIG. 9C, FIG. 11A to FIG. 11C, and FIG. 12A to FIG. 12C. For example, the processing module 1410 may be configured to perform all operations performed by the second node in the embodiments in FIG. 8A and FIG. 8B, FIG. 9A to FIG. 9C, FIG. 11A to FIG. 11C, and FIG. 12A to FIG. 12C other than receiving and sending operations.

FIG. 15 is a diagram of a structure of another communication apparatus 150 according to an embodiment of this application. The communication apparatus in FIG. 15 may be the first node, the second node, the third node, or the fourth node. As shown in FIG. 15, the communication apparatus 150 includes at least one processor 1510 and a transceiver 1520.

In some embodiments of this application, the processor 1510 and the transceiver 1520 may be configured to perform functions, operations, or the like performed by the first node. For example, the transceiver 1520 is configured to perform all receiving or sending operations performed by the first node in the embodiments in FIG. 5, FIG. 7, FIG. 8A and FIG. 8B, FIG. 9A to FIG. 9C, FIG. 11A to FIG. 11C, and FIG. 12A to FIG. 12C. For example, the processor 1510 is configured to perform all operations performed by the first node in the embodiments in FIG. 5, FIG. 7, FIG. 8A and FIG. 8B, FIG. 9A to FIG. 9C, FIG. 11A to FIG. 11C, and FIG. 12A to FIG. 12C other than receiving and sending operations.

In some embodiments of this application, the processor 1510 and the transceiver 1520 may be configured to perform functions, operations, or the like performed by the second node. For example, the transceiver 1520 is configured to perform all receiving or sending operations performed by the second node in the embodiments in FIG. 5, FIG. 7, FIG. 8A and FIG. 8B, FIG. 9A to FIG. 9C, FIG. 11A to FIG. 11C, and FIG. 12A to FIG. 12C. For example, the processor 1510 is configured to perform all operations performed by the second node in the embodiments in FIG. 5, FIG. 7, FIG. 8A and FIG. 8B, FIG. 9A to FIG. 9C, FIG. 11A to FIG. 11C, and FIG. 12A to FIG. 12C other than receiving and sending operations.

In some embodiments of this application, the processor 1510 and the transceiver 1520 may be configured to perform functions, operations, or the like performed by the third node. For example, the transceiver 1520 is configured to perform all receiving or sending operations performed by the third node in the embodiments in FIG. 8A and FIG. 8B, FIG. 9A to FIG. 9C, FIG. 11A to FIG. 11C, and FIG. 12A to FIG. 12C. For example, the processor 1510 is configured to perform all operations performed by the third node in the embodiments in FIG. 8A and FIG. 8B, FIG. 9A to FIG. 9C, FIG. 11A to FIG. 11C, and FIG. 12A to FIG. 12C other than receiving and sending operations.

In some embodiments of this application, the processor 1510 and the transceiver 1520 may be configured to perform functions, operations, or the like performed by the fourth node. For example, the transceiver 1520 is configured to perform all receiving or sending operations performed by the fourth node in the embodiments in FIG. 8A and FIG. 8B, FIG. 9A to FIG. 9C, FIG. 11A to FIG. 11C, and FIG. 12A to FIG. 12C. For example, the processor 1510 is configured to perform all operations performed by the fourth node in the embodiments in FIG. 8A and FIG. 8B, FIG. 9A to FIG. 9C, FIG. 11A to FIG. 11C, and FIG. 12A to FIG. 12C other than receiving and sending operations.

The transceiver 1520 is configured to communicate with another device/apparatus through a transmission medium. The processor 1510 receives or sends data and/or signaling through the transceiver 1520, and is configured to implement the method in the foregoing method embodiments. The processor 1510 may implement functions of the processing module 1410, and the transceiver 1520 may implement functions of the transceiver module 1420. Optionally, the transceiver 1520 may include a radio frequency circuit and an antenna. The radio frequency circuit is mainly configured to: perform conversion between a baseband signal and a radio frequency signal, and process the radio frequency signal. The antenna is mainly configured to receive or send a radio frequency signal in a form of electromagnetic wave. An input/output apparatus, such as a touchscreen, a display, or a keyboard, is mainly configured to: receive data input by a user, and output data to the user.

Optionally, the communication apparatus 150 may further include at least one memory 1530, configured to store program instructions and/or data. The memory 1530 is coupled to the processor 1510. The coupling in this embodiment of this application may be an indirect coupling or a communication connection between apparatuses, units, or modules in an electrical form, a mechanical form, or another form, and is used for information interaction between the apparatuses, the units, or the modules. The processor 1510 may cooperate with the memory 1530. The processor 1510 may execute the program instructions stored in the memory 1530. At least one of the at least one memory may be included in the processor.

The processor 1510 may read a software program in the memory 1530, interpret and execute instructions of the software program, and process data of the software program. When data needs to be sent wirelessly, the processor 1510 performs baseband processing on the to-be-sent data, and then outputs a baseband signal to the radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1510. The processor 1510 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In this embodiment of this application, a specific connection medium between the transceiver 1520, the processor 1510, and the memory 1530 is not limited. In this embodiment of this application, the memory 1530, the processor 1510, and the transceiver 1520 are connected through a bus 1540 in FIG. 15. The bus is represented by using a thick line in FIG. 15. A manner of connection between other components is merely an example for description, and is not limited thereto. The bus may be classified into an address bus, a data bus, a control bus, and the like. For ease of representation, only one thick line is used to represent the bus in FIG. 15, but this does not mean that there is only one bus or only one type of bus.

In this embodiment of this application, the processor may be one of the following devices: a general-purpose processor, a digital signal processor, an application-specific integrated circuit, a field programmable gate array or another programmable logic device, a discrete gate or a transistor logic device, a discrete hardware component, or all or some circuits configured to process functions in the foregoing device. The processor may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

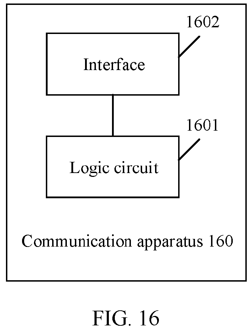

FIG. 16 is a diagram of a structure of another communication apparatus 160 according to an embodiment of this application. The communication apparatus in FIG. 16 may be the first node or a chip used in the first node, may be the second node or a chip used in the second node, may be the third node or a chip used in the third node, or may be the fourth node or a chip used in the fourth node. As shown in FIG. 16, the communication apparatus shown in FIG. 16 includes a logic circuit 1601 and an interface 1602. The processing module 1410 in FIG. 14 may be implemented by using the logic circuit 1601, and the transceiver module 1420 in FIG. 14 may be implemented by using the interface 1602. The logic circuit 1601 may be a chip, a processing circuit, an integrated circuit, a system on chip (system on chip, SoC) chip, or the like. The interface 1602 may be a communication interface, an input/output interface, or the like. In this embodiment of this application, the logic circuit and the interface may be coupled to each other. A specific manner of connection between the logic circuit and the interface is not limited in embodiments of this application.

In some embodiments of this application, the logic circuit and the interface may be configured to perform functions, operations, or the like performed by the first node.

In some embodiments of this application, the logic circuit and the interface may be configured to perform functions, operations, or the like performed by the second node.

In some embodiments of this application, the logic circuit and the interface may be configured to perform functions, operations, or the like performed by the third node.

In some embodiments of this application, the logic circuit and the interface may be configured to perform functions, operations, or the like performed by the fourth node.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiments is performed.

This application further provides a communication system, including the first node, the second node, the third node, and the fourth node.

This application further provides a chip. The chip includes a communication interface and a processor. The communication interface is configured to receive and send a signal of the chip. The processor is configured to execute computer program instructions, to enable a communication apparatus including the chip to perform the method in the foregoing embodiments.

All or some of the foregoing embodiments may be implemented by using software, hardware, firmware, or any combination thereof. When software is used to implement embodiments, all or some of the embodiments may be implemented in a form of computer program product. The computer program product includes one or more computer programs or instructions. When the computer programs or the instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, wherein the method is applied to a first node, and the method comprises:
generating a first frame, wherein the first frame is at least used to determine a sleep start time of a second node; and
sending the first frame.

2. The method according to claim 1, wherein the first frame comprises first indication information and second indication information, the first indication information at least indicates that the first frame is a control frame used to determine the sleep start time, and the second indication information is at least used to determine the sleep start time.

3. The method according to claim 2, wherein the second indication information comprises a backoff count value, the backoff count value is associated with a first time interval, and the first time interval is equal to a time interval between a moment at which the second node receives the first frame and the sleep start time of the second node.

4. The method according to claim 3, wherein a product of the backoff count value and a first periodicity is equal to the first time interval, and the first periodicity is a sending periodicity of the control frame.

5. The method according to any one of claims 2 to 4, wherein the first indication information comprises a frame type of the first frame, and the frame type of the first frame at least indicates that the first frame is a control frame used to determine the sleep start time.

6. The method according to any one of claims 2 to 5, wherein the method further comprises:
sending a second frame, wherein the second frame is used by the second node to maintain clock synchronization with the first node.

7. The method according to claim 6, wherein before sending the second frame, the method further comprises:
sending a third frame, wherein the third frame is at least used by the second node to determine the sleep start time, the sleep start time is a first moment, and a time interval between the first moment and a moment at which the second node receives the third frame is less than a time threshold.

8. The method according to claim 7, wherein the third frame comprises a frame type of the third frame and a backoff count value, the frame type of the third frame at least indicates that the third frame is a control frame used to determine the sleep start time, and the backoff count value in the third frame is at least used by the second node to determine the sleep start time.

9. The method according to claim 8, wherein the backoff count value in the third frame is 0.

10. The method according to any one of claims 1 to 6, wherein the method further comprises:
receiving a fourth frame, wherein the fourth frame at least indicates that the second node correctly receives a control frame used to determine the sleep start time; and
stopping sending a control frame that is at least used by the second node to determine the sleep start time.

11. The method according to claim 10, wherein the fourth frame specifically indicates that the second node and each downstream node of the second node correctly receive a control frame used to determine the sleep start time.

12. The method according to claim 10 or 11, wherein after stopping sending the control frame that is at least used by the second node to determine the sleep start time, the method further comprises:
entering a sleep state upon arrival of a target time point, wherein the target time point is a preset time point or the sleep start time.

13. The method according to any one of claims 1 to 12, wherein the first node is a primary node in a vehicle-mounted multi-node wired audio transmission system, and the second node is a secondary node in the vehicle-mounted multi-node wired audio transmission system.

14. A communication method, wherein the method is applied to a second node, and the method comprises:
receiving a first frame transmitted through a channel, wherein the first frame is at least used to determine a sleep start time of the second node; and
parsing the received first frame transmitted through the channel.

15. The method according to claim 14, wherein the first frame comprises first indication information and second indication information, the first indication information at least indicates that the first frame is a control frame used to determine the sleep start time, and the second indication information is at least used to determine the sleep start time.

16. The method according to claim 15, wherein the second indication information comprises a backoff count value, the backoff count value is associated with a first time interval, and the first time interval is equal to a time interval between a moment at which the second node receives the first frame and the sleep start time of the second node.

17. The method according to claim 16, wherein a product of the backoff count value and a first periodicity is equal to the first time interval, and the first periodicity is a sending periodicity of the control frame.

18. The method according to any one of claims 14 to 17, wherein the first indication information comprises a frame type of the first frame, and the frame type of the first frame at least indicates that the first frame is a control frame used to determine the sleep start time.

19. The method according to any one of claims 14 to 18, wherein the method further comprises:
receiving a second frame, wherein the second frame is at least used by the second node to maintain clock synchronization with a first node, and the first node is a source of the first frame.

20. The method according to claim 19, wherein before receiving the second frame, the method further comprises:
receiving a third frame, wherein the third frame is at least used by the second node to determine the sleep start time, the sleep start time is a first moment, and a time interval between the first moment and a moment at which the second node receives the third frame is less than a time threshold.

21. The method according to claim 20, wherein the third frame comprises a frame type of the third frame and a backoff count value, the frame type of the third frame at least indicates that the third frame is a control frame used to determine the sleep start time, and the backoff count value in the third frame is at least used by the second node to determine the sleep start time.

22. The method according to any one of claims 14 to 21, wherein the method further comprises:
forwarding the received first frame transmitted through the channel.

23. The method according to claim 22, wherein after forwarding the received first frame transmitted through the channel, the method further comprises:
sending a fourth frame, wherein the fourth frame at least indicates that the second node correctly receives a control frame used by the second node to determine the sleep start time.

24. The method according to claim 23, wherein the fourth frame specifically indicates that the second node and each downstream node of the second node correctly receive a control frame used to determine the sleep start time.

25. The method according to claim 24, wherein before sending the fourth frame, the method further comprises:
receiving a fifth frame, wherein the fifth frame at least indicates that each downstream node of the second node correctly receives the control frame used to determine the sleep start time; and
the sending the fourth frame comprises:
sending the fourth frame when the second node correctly receives the control frame used by the second node to determine the sleep start time.

26. The method according to any one of claims 14 to 21, wherein the method further comprises:
forwarding the first frame when correctly receiving the first frame; or
sending a sixth frame when not correctly receiving the first frame, wherein the sixth frame at least indicates that the second node does not correctly receive the first frame.

27. The method according to any one of claims 14 to 26, wherein the source of the first frame is a primary node in a vehicle-mounted multi-node wired audio transmission system, and the second node is a secondary node in the vehicle-mounted multi-node wired audio transmission system.

28. A communication apparatus, comprising a module configured to implement the method according to any one of claims 1 to 13.

29. A communication apparatus, comprising a module configured to implement the method according to any one of claims 14 to 27.

30. A communication apparatus, comprising a processor, wherein the processor is coupled to a memory, the memory stores computer program instructions, and the processor is configured to execute the computer program instructions, to enable the communication apparatus to perform the method according to any one of claims 1 to 27.

31. A chip, comprising a processor and a communication interface, wherein the processor reads, through the communication interface, instructions stored in a memory, and executes the instructions, to enable a communication apparatus comprising the chip to perform the method according to any one of claims 1 to 27.

32. A computer-readable storage medium, wherein the computer-readable storage medium stores a computer program, the computer program comprises program instructions, and when the program instructions are executed, a computer is enabled to perform the method according to any one of claims 1 to 27.

33. A computer program product, wherein when the computer program product is run on a computer, the computer is enabled to perform the method according to any one of claims 1 to 27.
